# EUROPEAN PATENT APPLICATION

(11) **EP 4 603 947 A1**
(43) Date of publication of application: **20.08.2025**
(21) Application number: 23891831.2
(22) Date of filing: 16.10.2023
(51) Int. Cl.: G06F 1/16, H04R 1/28

(54) **ELECTRONIC DEVICE INCLUDING AUDIO PATH FOR TRANSFERRING AUDIO FROM SPEAKER TO OUTSIDE**

(30) Priority: 18.11.2022 KR 20220155160; 20.12.2022 KR 20220179836
(71) Applicant: Samsung Electronics Co., Ltd., Suwon-si, Gyeonggi-do 16677 (KR)
(72) Inventor: CHO, Woojin, Suwon-si Gyeonggi-do 16677 (KR); KIM, Kiwon, Suwon-si Gyeonggi-do 16677 (KR); SONG, Jihoon, Suwon-si Gyeonggi-do 16677 (KR); LEE, Myungcheol, Suwon-si Gyeonggi-do 16677 (KR); LEE, Byounghee, Suwon-si Gyeonggi-do 16677 (KR); CHO, Joonrae, Suwon-si Gyeonggi-do 16677 (KR); HWANG, Hochul, Suwon-si Gyeonggi-do 16677 (KR)
(74) Representative: HGF
(86) International application number: PCT/KR2023/015919
(87) International publication number: WO 2024/106763

(57) **Abstract**

An electronic device according to an embodiment comprises: a support member including a first area and a second area; a speaker disposed in the first area; a first audio hole disposed at one surface of the speaker; a second audio hole disposed at the one surface of the speaker and separated from the first audio hole; a first audio path extending within the first area from the first audio hole; and a second audio path extending from the second audio hole in the first area to the second area and separated from the first audio path.

## Description

### [Technical Field]

The present disclosure relates to an electronic device including an audio path for transmitting audio from a speaker to the outside.

### [Background Art]

An electronic device may include various electronic components to satisfy a user's demand. For example, the electronic device may include a speaker configured to emit audio to provide audible information to a user. The electronic device may include an audio path capable of guiding movement of audio outputted from the speaker to the outside of the electronic device. The audio outputted from the speaker may be transmitted from the speaker within the electronic device to the outside of the electronic device by moving along the audio path.

### [Disclosure]

### [Technical Solution]

According to an embodiment, an electronic device may comprise a supporting member including a first region and a second region spaced apart from the first region. According to an embodiment, the electronic device may comprise a speaker at least at least partially disposed in the first region. According to an embodiment, the electronic device may comprise a first audio hole disposed on a surface of the speaker. According to an embodiment, the electronic device may comprise a second audio hole, disposed on the surface of the speaker, separated from the first audio hole. According to an embodiment, the electronic device may comprise a first audio path extending within the first region from the first audio hole to transmit an audio outputted from the speaker through the first audio hole to an outside of the electronic device. According to an embodiment, the electronic device may comprise a second audio path, extending from the second audio hole within the first region to the second region to transmit an audio outputted from the speaker through the second audio hole to the outside of the electronic device, and separated from the first audio path.

According to an embodiment, an electronic device may comprise a supporting member including a first region and a second region spaced apart from the first region. According to an embodiment, the electronic device may comprise a sensor disposed between the first region and the second region. According to an embodiment, the electronic device may comprise a speaker disposed within the first region. According to an embodiment, the electronic device may comprise an enclosure, including a first audio hole disposed on the speaker and a second audio hole separated from the first audio hole, and surrounding the speaker. According to an embodiment, the electronic device may comprise a first audio duct member coupled to the enclosure and extending from the first audio hole within the first region to transmit audio outputted from the speaker through the first audio hole to the outside of the electronic device. According to an embodiment, the electronic device may comprise a second audio duct member, coupled to the enclosure, extending from the second audio hole within the first region to the second region to transmit audio outputted from the speaker through the second audio hole to the outside of the electronic device, and separated from the first audio duct member. According to an embodiment, the sensor may be disposed between the first audio path and the second audio path.

According to an embodiment, an electronic device may comprise a supporting member. According to an embodiment, the electronic device may comprise a speaker disposed in the supporting member. According to an embodiment, the electronic device may comprise a first audio hole disposed on a surface of the speaker. According to an embodiment, the electronic device may comprise a second audio hole, disposed on the surface of the speaker, and separated from the first audio hole. According to an embodiment, the electronic device may comprise a first audio path, wherein an end of the first audio path is connected to the first audio hole and another end of the first audio path is connected to an outside of the electronic device such that an audio outputted through the first audio hole is transmitted to the outside of the electronic device. According to an embodiment, the electronic device may comprise a second audio path separated from the first audio path, wherein an end of the second audio path is connected to the second audio hole and another end of the second audio path is connected to the outside of the electronic device such that an audio outputted through the second audio hole is transmitted to the outside of the electronic device. According to an embodiment, a straight-line distance from the end of the first audio path to the another end of the first audio path may be different from a straight-line distance from the end of the second audio path to the another end of the second audio path.

### [Description of the Drawings]

FIG. 1 is a block diagram of an electronic device in a network environment according to various embodiments.
FIG. 2 is a diagram illustrating an exemplary electronic device according to an embodiment.
FIG. 3 is an exploded perspective view of an exemplary electronic device according to an embodiment.
FIG. 4A is a perspective view of an exemplary electronic device according to an embodiment.
FIG. 4B is an exploded perspective view of an exemplary electronic device according to an embodiment.
FIG. 4C is a top plan view of an exemplary electronic device according to an embodiment.
FIG. 5 is a top plan view of an exemplary electronic device according to an embodiment.
FIG. 6 is a cross-sectional view illustrating an example of an exemplary electronic device according to an embodiment, cut along line A-A' of FIG. 4A.
FIG. 7 is a top plan view of an exemplary electronic device according to an embodiment.
FIG. 8A is a top plan view of an exemplary electronic device according to an embodiment.
FIG. 8B is a top plan view of an exemplary electronic device according to an embodiment.
FIG. 8C is a top plan view of an exemplary electronic device according to an embodiment.
FIG. 9 is an exploded perspective view of an exemplary electronic device according to an embodiment.
FIG. 10A is an exploded perspective view of an exemplary electronic device according to an embodiment.
FIG. 10B is an exploded perspective view of an exemplary electronic device according to an embodiment.
FIG. 11 is a graph illustrating an exemplary relationship between a frequency of audio outputted from a speaker and a sound pressure level, according to an embodiment.

### [Mode for Invention]

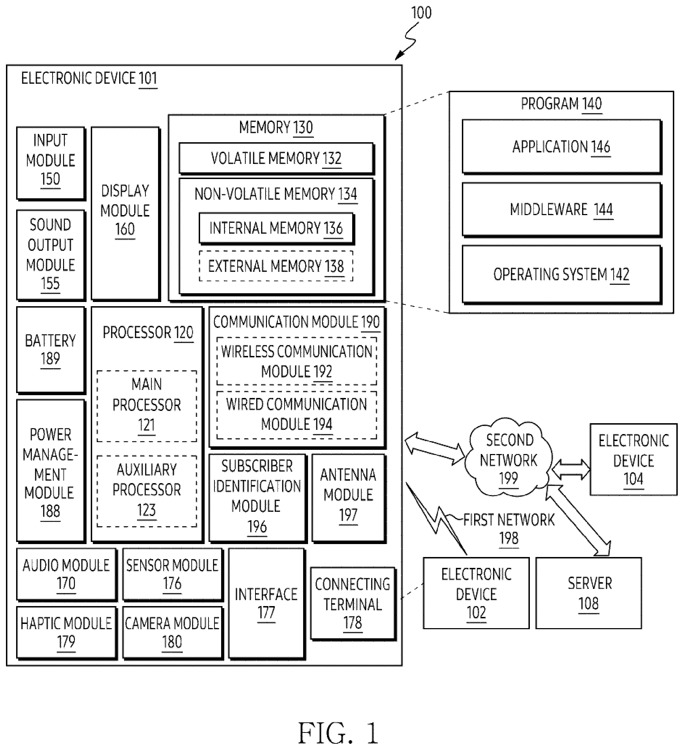

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

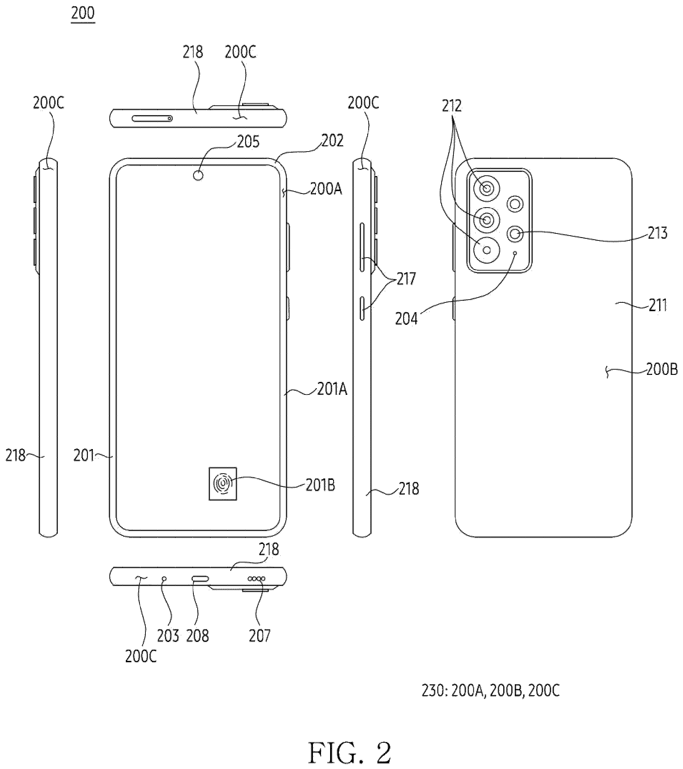

FIG. 2 is a diagram illustrating an exemplary electronic device according to an embodiment.

Referring to FIG. 2, an electronic device 200 according to an embodiment may include a housing that forms an exterior of the electronic device 200. For example, the housing may include a first surface (or front surface) 200A, a second surface (or rear surface) 200B, and a third surface (or side surface) 200C surrounding a space between the first surface 200A and the second surface 200B. In an embodiment, the housing may refer to a structure (e.g., the frame structure 240 of FIG. 2) forming at least a portion of the first surface 200A, the second surface 200B, and/or the third surface 200C.

According to an embodiment, the electronic device 200 may include a front plate 202 that is substantially transparent. In an embodiment, the front plate 202 may form at least a portion of the first surface 200A. In an embodiment, the front plate 202 may include, for example, a glass plate or a polymer plate, including various coating layers, but is not limited thereto.

According to an embodiment, the electronic device 200 may include a rear plate 211 that is substantially opaque. In an embodiment, the rear plate 211 may form at least a portion of the second surface 200B. In an embodiment, the rear plate 211 may be formed of coated or colored glass, ceramic, polymer, metal (e.g., aluminum, stainless steel (STS), or magnesium), or a combination of at least two of the above materials.

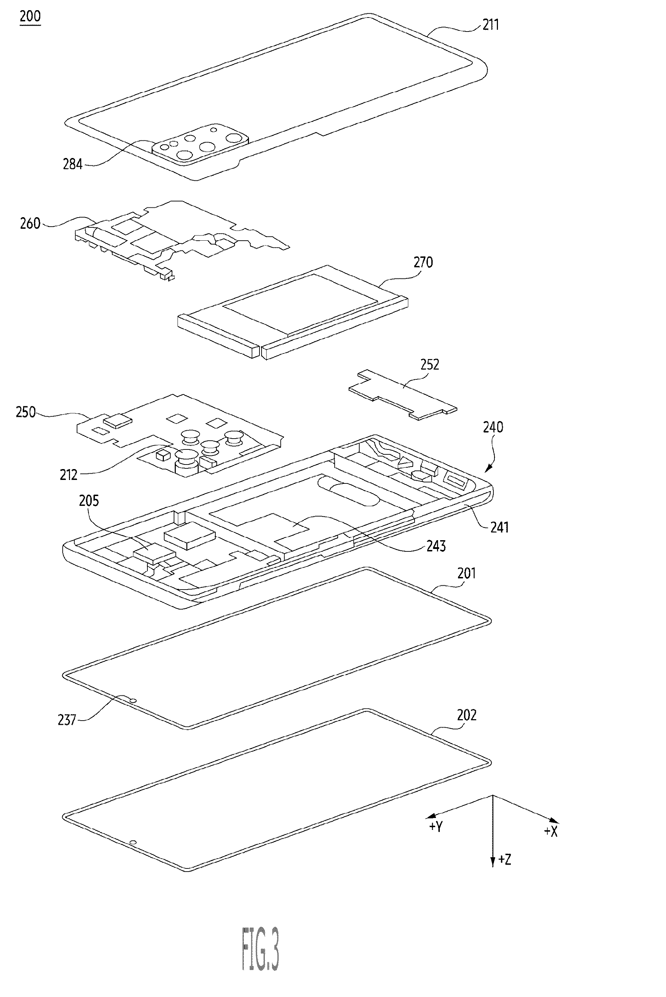

According to an embodiment, the electronic device 200 may include a side bezel structure (or side member) 218 (e.g., the sidewall 241 of the frame structure 240 of FIG. 3). In an embodiment, the side bezel structure 218 may be coupled to the front plate 202 and/or the rear plate 211 to form at least a portion of the third surface 200C of the electronic device 200. For example, the side bezel structure 218 may form the entire third surface 200C of the electronic device 200, and for another example, the side bezel structure 218 may form the third surface 200C of the electronic device 200 together with the front plate 202 and/or the rear plate 211.

Unlike the illustrated embodiment, when the third surface 200C of the electronic device 200 is partially formed by the front plate 202 and/or the rear plate 211, the front plate 202 and/or the rear plate 211 may include a region that is bent from a periphery thereof toward the rear plate 211 and/or the front plate 202 and seamlessly extends. For example, the extended region of the front plate 202 and/or the rear plate 211 may be located at both ends of a long edge of the electronic device 200, but is not limited by the above-described examples.

In an embodiment, the side bezel structure 218 may include a metal and/or a polymer. In an embodiment, the rear plate 211 and the side bezel structure 218 may be integrally formed and may include the same material (e.g., a metallic material such as aluminum), but are not limited thereto. For example, the rear plate 211 and the side bezel structure 218 may be formed in separate configurations and/or may include different materials.

In an embodiment, the electronic device 200 may include at least one of a display 201, audio modules 203, 204, and 207, a sensor module (not illustrated), camera modules 205, 212, 213, a key input device 217, a light emitting element (not illustrated), and/or a connector hole 208. In an embodiment, the electronic device 200 may omit at least one (e.g., the key input device 217 or the light emitting device (not illustrated)) of the above components, or may further include another component.

In an embodiment, the display 201 (e.g., the display module 160 of FIG. 1) may be visually exposed through a significant portion of the front plate 202. For example, at least a portion of the display 201 may be visible through the front plate 202 forming the first surface 200A. In an embodiment, the display 201 may be disposed on a rear surface of the front plate 202.

In an embodiment, an outer periphery shape of the display 201 may be formed substantially the same as an outer periphery shape of the front plate 202 adjacent to the display 201. In an embodiment, in order to expand an area in which the display 201 is visually exposed, a distance between the outer periphery of the display 201 and the outer periphery of the front plate 202 may be formed substantially the same.

In an embodiment, the display 201 (or the first surface 200A of the electronic device 200) may include a screen display region 201A. In an embodiment, the display 201 may provide visual information to the user via the screen display region 201A. In the illustrated embodiment, when the front surface 200A is viewed from above, it is illustrated that the screen display region 201A is spaced apart from the outer periphery of the first surface 200A and is located inside the first surface 200A, but it is not limited thereto. In an embodiment, when the front surface 200A is viewed from above, at least a portion of a periphery of the screen display region 201A may substantially coincide with a periphery of the first surface 200A (or the front plate 202).

In an embodiment, the screen display region 201A may include a sensing region 201B configured to obtain the user's biometric information. Herein, the meaning of "the screen display region 201A includes the sensing region 201B" may be understood as at least a portion of the sensing region 201B capable of being overlapped with the screen display region 201A. For example, the sensing region 201B may mean a region capable of displaying visual information by the display 201 like other regions of the screen display region 201A, and additionally obtaining the user's biometric information (e.g., fingerprint). In an embodiment, the sensing region 201B may be formed in the key input device 217.

In an embodiment, the display 201 may include a region in which a first camera module 205 (e.g., the camera module 180 of FIG. 1) is located. In an embodiment, an opening portion may be formed in the region of the display 201, and the first camera module 205 (e.g., a punch hole camera) may be at least partially disposed in the opening portion to face the first surface 200A. For example, the screen display region 201A may surround at least a portion of a periphery of the opening portion. In an embodiment, the first camera module 205 (e.g., an under display camera (UDC)) may be disposed under the display 201 to overlap the region of the display 201. For example, the display 201 may provide visual information to the user via the region, and additionally, the first camera module 205 may obtain an image corresponding to a direction facing the first surface 200A via the region of the display 201.

In an embodiment, the display 201 may be combined or disposed adjacent to a touch sensing circuit, a pressure sensor capable of measuring the intensity (pressure) of the touch, and/or a digitizer detecting a magnetic field type stylus pen.

In an embodiment, the audio modules 203, 204, and 207 (e.g., the audio module 170 of FIG. 1) may include microphone holes 203 and 204 and a speaker hole 207.

In an embodiment, the microphone holes 203 and 204 may include a first microphone hole 203 formed in a partial region of the third surface 200C and a second microphone hole 204 formed in a partial region of the second surface 200B. A microphone (not illustrated) for obtaining external sound may be disposed within the microphone holes 203 and 204. The microphone may include a plurality of microphones to sense a direction of sound.

In an embodiment, the second microphone hole 204 formed in a partial region of the second surface 200B may be disposed adjacent to the camera modules 205, 212, and 213. For example, the second microphone hole 204 may obtain sound according to the operation of the camera modules 205, 212, and 213. However, it is not limited thereto.

In an embodiment, the speaker hole 207 may include an external speaker hole 207 and a call receiver hole (not illustrated). The external speaker hole 207 may be formed on a portion of the third surface 200C of the electronic device 200. In an embodiment, the external speaker hole 207 and the microphone hole 203 may be implemented as one hole. Although not illustrated, a call receiver hole (not illustrated) may be formed on another portion of the third surface 200C. For example, the call receiver hole may be formed on an opposite side of the external speaker hole 207 on the third surface 200C. For example, based on the illustration of FIG. 2, the external speaker hole 207 may be formed on the third surface 200C, which corresponds to a lower end of the electronic device 200, and the call receiver hole may be formed on the third surface 200C, which corresponds to an upper end of the electronic device 200. However, it is not limited thereto, and in an embodiment, the call receiver hole may be formed at a position other than the third surface 200C. For example, the call receiver hole may be formed by a separated space between the front plate 202 (or the display 201) and the side bezel structure 218.

In an embodiment, the electronic device 200 may include at least one speaker (not illustrated) configured to output sound to the outside of the housing via the external speaker hole 207 and/or the call receiver hole (not illustrated).

In an embodiment, a sensor module (not illustrated) (e.g., the sensor module 176 of FIG. 1) may generate an electrical signal or a data value corresponding to an operating state inside the electronic device 200 or an external environmental state. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

In an embodiment, the camera modules 205, 212, and 213 (e.g., the camera module 180 of FIG. 1) may include a first camera module 205 disposed to face the first surface 200A of the electronic device 200, a second camera module 212 disposed to face the second surface 200B, and a flash 213.

In an embodiment, the second camera module 212 may include a plurality of cameras (e.g., dual cameras, triple cameras, or quad cameras). However, the second camera module 212 is not necessarily limited to including a plurality of cameras, and may include one camera.

In an embodiment, the first camera module 205 and the second camera module 212 may include one or more lenses, an image sensor, and/or an image signal processor.

In an embodiment, the flash 213 may include, for example, a light emitting diode or a xenon lamp. In an embodiment, two or more lenses (infrared cameras, wide-angle and telephoto lenses) and image sensors may be disposed on one surface of the electronic device 200.

In an embodiment, the key input device 217 (e.g., the input module 150 of FIG. 1) may be disposed on the third surface 200C of the electronic device 200. In an embodiment, the electronic device 200 may not include some or all of the key input devices 217, and the excluded key input device 217 may be implemented in another form, such as a soft key, on the display 201.

In an embodiment, the connector hole 208 may be formed on the third surface 200C of the electronic device 200 so that a connector of an external device may be accommodated. A connection terminal (e.g., the connecting terminal 178 of FIG. 1) electrically connected to a connector of an external device may be disposed in the connector hole 208. According to an embodiment, the electronic device 200 may include an interface module (e.g., the interface 177 of FIG. 1) for processing electrical signals transmitted and received via the connecting terminal.

In an embodiment, the electronic device 200 may include a light emitting element (not illustrated). For example, the light emitting element (not illustrated) may be disposed on the first surface 200A of the housing. The light emitting device (not illustrated) may provide state information of the electronic device 200 in an optical form. In an embodiment, the light emitting device (not illustrated) may provide a light source linked with an operation of the first camera module 205. For example, the light emitting element (not illustrated) may include an LED, an IR LED, and/or a xenon lamp.

FIG. 3 is an exploded perspective view of an exemplary electronic device according to an embodiment.

Hereinafter, overlapping descriptions of configurations having the same reference numerals as the above-described configurations will be omitted.

Referring to FIG. 3, according to an embodiment, the electronic device 200 may include a frame structure 240, a first printed circuit board 250, a second printed circuit board 252, a cover plate 260, and a battery 270.

In an embodiment, the frame structure 240 may include a sidewall 241 forming an exterior (e.g., the third surface 200C of FIG. 2) of the electronic device 200 and a supporting portion 243 extending inward from the sidewall 241. In an embodiment, the frame structure 240 may be disposed between the display 201 and the rear plate 211. In an embodiment, the sidewall 241 of the frame structure 240 may surround a space between the rear plate 211 and the front plate 202 (and/or the display 201), and the supporting portion 243 of the frame structure 240 may extend from the sidewall 241 within the space.

In an embodiment, the frame structure 240 may support or accommodate other components included in the electronic device 200. For example, the display 201 may be disposed on a surface of the frame structure 240 facing a direction (e.g., +z direction), and the display 201 may be supported by the supporting portion 243 of the frame structure 240. For another example, the first printed circuit board 250, the second printed circuit board 252, the battery 270, and the second camera module 212 may be disposed on another surface of the frame structure 240 facing another direction (e.g., the -z direction) opposite to the direction. The first printed circuit board 250, the second printed circuit board 252, the battery 270, and the second camera module 212 may be respectively seated in recesses defined by the sidewall 241 and/or the supporting portion 243 of the frame structure 240.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed on the frame structure 240 via a coupling member such as a screw. For example, the battery 270 may be fixedly disposed on the frame structure 240 via an adhesive member (e.g., a double-sided tape). However, it is not limited by the above-described example.

In an embodiment, the cover plate 260 may be disposed between the first printed circuit board 250 and the rear plate 211. In an embodiment, the cover plate 260 may be disposed on the first printed circuit board 250. For example, the cover plate 260 may be disposed on a surface of the first printed circuit board 250 facing the -z direction.

In an embodiment, the cover plate 260 may at least partially overlap the first printed circuit board 250 with respect to the z-axis. In an embodiment, the cover plate 260 may cover at least a portion of the first printed circuit board 250. Accordingly, the cover plate 260 may protect the first printed circuit board 250 from physical impact or may prevent separation of a connector (e.g., the connector 234 of FIG. 3) coupled to the first printed circuit board 250.

In an embodiment, the cover plate 260 may be fixedly disposed on the first printed circuit board 250 via a coupling member (e.g., a screw), or may be coupled to the frame structure 240 together with the first printed circuit board 250 via the coupling member.

In an embodiment, the display 201 may be disposed between the frame structure 240 and the front plate 202. For example, the front plate 202 may be disposed on a side (e.g., +z direction) of the display 201, and the frame structure 240 may be disposed on another side (e.g., - z direction).

In an embodiment, the front plate 202 may be coupled to the display 201. For example, the front plate 202 and the display 201 may be adhered to each other via an optical adhesive member (e.g., optically clear adhesive (OCA) or optically clear resin (OCR)) interposed therebetween.

In an embodiment, the front plate 202 may be coupled to the frame structure 240. For example, the front plate 202 may include an outer portion extending outside the display 201 when viewed in the z-axis direction, and may be attached to the frame structure 240 via an adhesive member (e.g., a double-sided tape) placed between the outer portion of the front plate 202 and the frame structure 240 (e.g., the sidewall 241). However, it is not limited by the above-described example.

In an embodiment, the first printed circuit board 250 and/or the second printed circuit board 252 may be equipped with a processor (e.g., the processor 120 of FIG. 1), memory (e.g., the memory 130 of FIG. 1), and/or an interface (e.g., the interface 177 of FIG. 1). For example, the processor may include one or more of a central processing unit, an application processor, a graphic processing unit, an image signal processor, a sensor hub processor, or a communication processor. For example, the memory may include a volatile memory or a non-volatile memory. For example, an interface may include a high definition multimedia interface (HDMI), a universal serial bus (USB), an SD card interface, and/or an audio interface. The interface may electrically or physically connect the electronic device 200 to an external electronic device, and may include a USB connector, an SD card/MMC connector, or an audio connector. In an embodiment, the first printed circuit board 250 and the second printed circuit board 252 may be operably or electrically connected to each other via a connection member (e.g., a flexible printed circuit board).

In an embodiment, the battery 270 (e.g., the battery 189 of FIG. 1) may supply power to at least one component of the electronic device 200. For example, the battery 270 may include a rechargeable secondary battery or a fuel cell. At least a portion of the battery 270 may be disposed on substantially the same plane as the first printed circuit board 250 and/or the second printed circuit board 252.

According to an embodiment, the electronic device 200 may include an antenna module (not illustrated) (e.g., the antenna module 197 of FIG. 1). In an embodiment, the antenna module may be disposed between the rear plate 211 and the battery 270. For example, the antenna module may include a near field communication (NFC) antenna, a wireless charging antenna, and/or a magnetic secure transmission (MST) antenna. For example, the antenna module may perform short-range communication with an external device or wirelessly transmit and receive power with an external device.

In an embodiment, the first camera module 205 (e.g., the front camera) may be disposed in at least a portion (e.g., the supporting portion 243) of the frame structure 240 so that lens may receive external light through a partial region (e.g., a camera region 237) of the front plate 202 (e.g., the front surface 200A of FIG. 2).

In an embodiment, the second camera module 212 (e.g., the rear camera) may be disposed between the frame structure 240 and the rear plate 211. In an embodiment, the second camera module 212 may be electrically connected to the first printed circuit board 250 via a connection member (e.g., a connector). In an embodiment, the second camera module 212 may be disposed such that lens may receive external light through a camera region 284 of the rear plate 211 of the electronic device 200.

In an embodiment, the camera region 284 may be formed on a surface (e.g., the rear surface 200B of FIG. 2) of the rear plate 211. In an embodiment, the camera region 284 may be formed to be at least partially transparent so that external light may be incident on the lens of the second camera module 212. In an embodiment, at least a portion of the camera region 284 may protrude a predetermined height from the surface of the rear plate 211. However, it is not limited thereto, and in an embodiment, the camera region 284 may also form substantially the same plane as the surface of the rear plate 211.

In an embodiment, a housing of the electronic device 200 may mean a configuration or a structure forming at least a portion of the exterior of the electronic device 200. In this respect, at least a portion of the front plate 202, the frame structure 240, and/or the rear plate 211, which form the exterior of the electronic device 200, may be referred to as a housing of the electronic device 200.

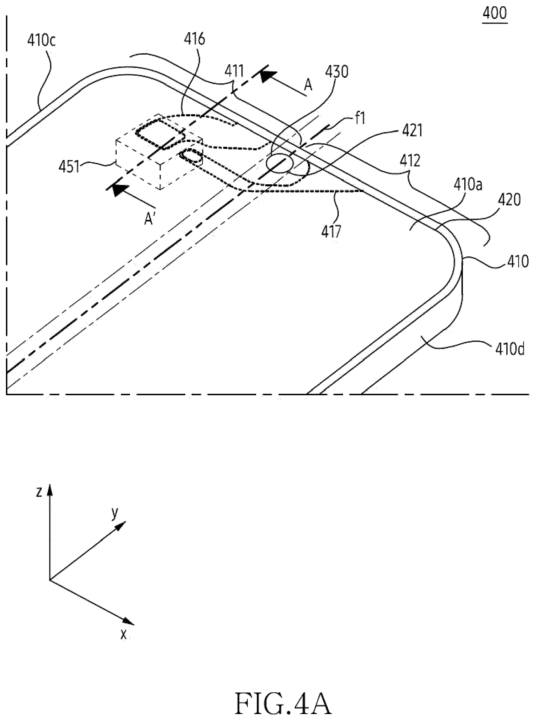

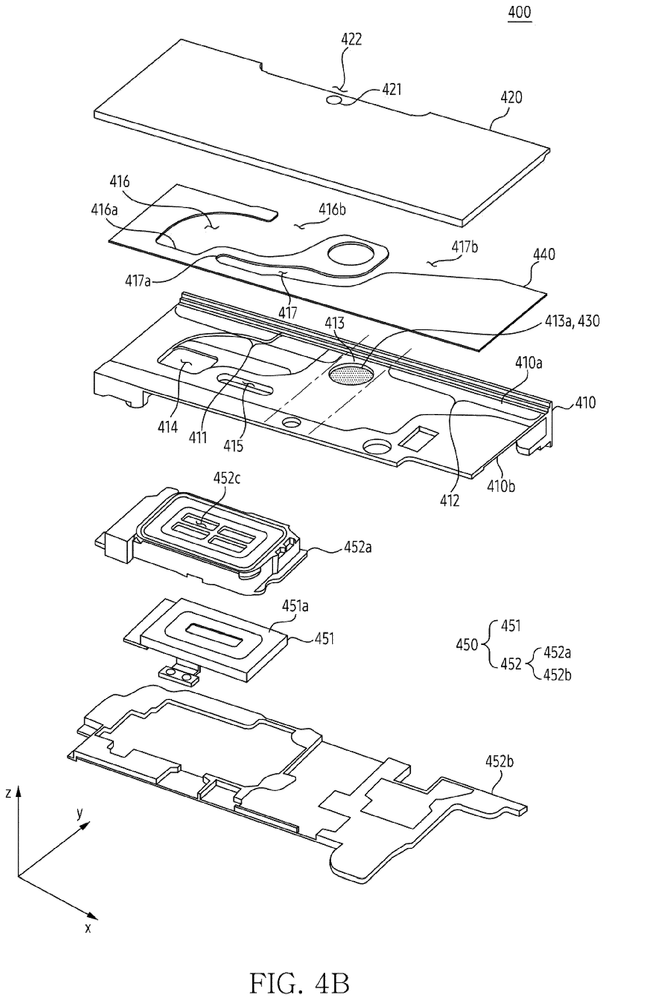

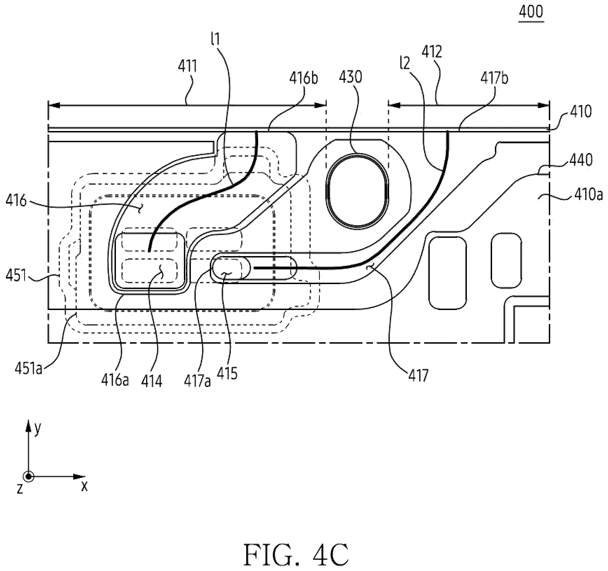

FIG. 4A is a perspective view of an exemplary electronic device according to an embodiment, FIG. 4B is an exploded perspective view of an exemplary electronic device according to an embodiment, and FIG. 4C is a top plan view of an exemplary electronic device according to an embodiment.

Referring to FIGS. 4A, 4B, and 4C, an electronic device 400 (e.g., the electronic device 101 of FIG. 1 and the electronic device 200 of FIG. 2) according to an embodiment may include a supporting member 410, a display 420 (e.g., the display 201 of FIG. 2), a sensor 430, at least one waterproof member 440, and/or a speaker module 450 (e.g., the sound output module 155 of FIG. 1).

According to an embodiment, the supporting member 410 may support various components of the electronic device 400. For example, a surface 410a of the supporting member 410 may support the display 420. The supporting member 410 may accommodate various components of the electronic device 400. For example, another surface 410b of the supporting member 410 opposite to the surface 410a of the supporting member 410 may be in contact with an inner space of the supporting member 410. For example, the other surface 410b of the supporting member 410 may face the speaker module 450. A direction (e.g., a -z direction) in which the other surface 410b of the supporting member 410 faces may be opposite to a direction (e.g., a +z direction) in which the surface 410a of the supporting member 410 faces. According to an embodiment, the supporting member 410 may include a first side 410c and/or a second side 410d. The first side 410c may be exposed to the outside of the supporting member 410. The first side surface 410c may face a first direction (e.g., -x direction). The second side 410d may be exposed to the outside of the supporting member 410. The second side 410d may face a second direction (e.g., +x direction) opposite to the first direction. According to an embodiment, the second side 410d may be spaced apart from the first side 410c. For example, the second side 410d may be spaced apart from the first side 410c along the second direction (e.g., +x direction). The second side 410d may be substantially parallel to the first side 410c. According to an embodiment, the supporting member 410 may include a first region 411, a second region 412, and/or a cover portion 413. According to an embodiment, the supporting member 410 may form at least a portion of the housing of FIG. 2. For example, the supporting member 410 may form the entire housing of FIG. 2. When the supporting member 410 forms the entire housing, the supporting member 410 may define at least a portion of the outer surface of the electronic device 400. However, it is not limited thereto. The supporting member 410 may form only a portion of the housing of FIG. 2.

According to an embodiment, the first region 411 and the second region 412 may be classified based on the sensor 430. The first region 411 may accommodate a portion of the components disposed within the supporting member 410. The first region 411 may support some of the components disposed on the supporting member 410. The first region 411 may be disposed outside the sensor 430. For example, the first region 411 may mean a region of the supporting member 410 spaced apart from the sensor 430 along the first direction (e.g., -x direction) when the supporting member 410 is viewed from above. The second region 412 may accommodate another portion of the components disposed within the supporting member 410. The second region 412 may support another portion of the components disposed on the supporting member 410. The second region 412 may be spaced apart from the first region 412. For example, the second region 412 may be spaced apart from the first region 411 along the second direction (e.g., +x direction) opposite to the first direction. The second region 412 may be disposed outside the sensor 430. For example, the second region 412 may mean another region of the supporting member 410 spaced apart from the sensor 430 along the second direction (e.g., +x direction) when the supporting member 410 is viewed from above.

According to an embodiment, the cover portion 413 may expose at least a portion of the sensor 430 to the outside of the supporting member 410 so that the sensor 430 may obtain information from the outside of the electronic device 400. The cover portion 413 may accommodate at least a portion of the sensor 430. The cover portion 413 may cover at least a portion of the sensor 430. The cover portion 413 may surround at least a portion of the sensor 430. According to an embodiment, the cover portion 413 may protrude from the surface 410a of the supporting member 410. For example, the cover portion 413 may have a shape extending from the surface 410a of the supporting member 410 along a direction (e.g., +z direction) in which the surface 410a of the supporting member 410 faces. According to an embodiment, the cover portion 413 may have a shape corresponding to at least a portion of the sensor 430. For example, the cover portion 413 may include an opening 413a so that at least a portion of the sensor 430 is exposed to the outside of the supporting member 410. The opening 413a may penetrate the supporting member 410. For example, the opening 413a may penetrate the cover portion 413. For example, the opening 413a may extend from the surface 410a of the supporting member 410 to the other surface 410b of supporting member 410. For example, the opening 413a may overlap the sensor 430 when the supporting member 410 is viewed from above.

According to an embodiment, the display 420 may be configured to provide visual information. For example, the display 420 may be disposed on the supporting member 410. For example, the display 420 may be disposed on the surface 410a of the supporting member 410. For example, the display 420 may be attached to the surface 410a of the supporting member 410. The display 420 may be disposed on the first region 411 and the second region 412. For example, a portion of the display 420 may be disposed on the first region 411, and another portion of the display 420 may be disposed on the second region 412. According to an embodiment, the display 420 may include a hole 421 corresponding to the sensor 430. The hole 421 may be disposed on the sensor 430. For example, the density of pixels included in the hole 421 may be lower than the density of pixels included in other regions of the display 420 surrounding the hole 421. As the density of pixels included in the hole 421 is lower than the density of pixels included in the other regions of the display 420, the sensor 430 may be visible from the outside of the electronic device 400. However, it is not limited thereto. For example, the hole 421 of the display 420 may include not include a pixel or may include a disabled pixel that does not emit light to the outside of the electronic device 300.

According to an embodiment, the display 420 may include a notch 422. The notch 422 may transmit audio outputted from the speaker module 450 to the outside of a housing (e.g., the housing of FIG. 2). The notch 422 may provide a passage through which audio from the speaker module 450 may move to the outside of the housing. The notch 422 may be a portion of the display 420 to which a portion of the display 420 is omitted in the display 420. The notch 422 may have an empty space shape.

According to an embodiment, the sensor 430 may be configured to obtain information from the outside of the electronic device 400. For example, the sensor 430 may include an image sensor configured to obtain an image based on receiving light from an object outside the electronic device 400. For example, the sensor 430 may include a camera. For example, the sensor 430 may be configured to obtain information for identifying a user of the electronic device 400. When the sensor 430 is configured to obtain information (e.g., fingerprint) for identifying a user, the sensor 430 may include at least one of an optical sensor, an ultrasonic sensor, and/or a capacitive sensor. According to an embodiment, the sensor 430 may be disposed within the housing. The sensor 430 may be disposed below (e.g., -z-axis direction) the display 420. For example, the sensor 430 may be disposed below (e.g., -z-axis direction) the other surface 410b of the supporting member 410. For example, the sensor 430 may face the other surface 410b of the supporting member 410. According to an embodiment, at least a portion of the sensor 430 may be visible from the outside of the housing. For example, the sensor 430 disposed inside the supporting member 410 may be visible from the outside of the housing via the opening 413a of the cover portion 413. According to an embodiment, the sensor 430 may be disposed between the first region 411 and the second region 412. The sensor 430 may define a boundary between the first region 411 and the second region 412. The sensor 430 may be disposed on the boundary between the first region 411 and the second region 412. According to an embodiment, the sensor 430 may be disposed between the first side 410c and the second side 410d. The sensor 430 may be disposed on an imaginary axis f1 passing through an intermediate point between the first side 410c and the second side 410d. For example, a distance between the sensor 430 and the first side 410c may be substantially the same as a distance between the sensor 430 and the second side 410d. For example, the sensor 430 may be disposed on an imaginary axis f1 passing through a center of the supporting member 410. The imaginary axis f1 may be substantially parallel to the first side 410c and/or the second side 410d of the supporting member 410. For example, when the sensor 430 includes a camera, a user of the electronic device 400 may easily obtain an image via the sensor 430 disposed at the center of the supporting member 410.

According to an embodiment, at least one waterproof member 440 may reduce the inflow of foreign substances and/or moisture into the supporting member 410. The at least one waterproof member 440 may fill a gap between the supporting member 410 and the display 420. According to an embodiment, the at least one waterproof member 440 may be disposed between the supporting member 410 and the display 420. For example, the at least one waterproof member 440 may be in contact with the supporting member 410 and the display 420. For example, the at least one waterproof member 440 may be disposed on the surface 410a of the supporting member 410. For example, the at least one waterproof member 440 may be disposed on the cover portion 413 of the supporting member 410. For example, the at least one waterproof member 440 may have a form of tape including an adhesive material, but is not limited thereto. According to an embodiment, the at least one waterproof member 440 may be referred to as an example of a sealing member including an adhesive material, but is not limited thereto. For example, the at least one waterproof member 440 may be referred to as an example of an adhesive member including an adhesive material.

According to an embodiment, the speaker module 450 may be configured to emit audio transmitted to the outside of the electronic device 400. The speaker module 450 may be disposed on the supporting member 410. For example, at least a portion of the speaker module 450 may be disposed within the first region 411 of the supporting member 410. For example, the speaker module 450 may be disposed below (e.g., the -z-axis direction) the other surface 410b of the supporting member 410. According to an embodiment, the speaker module 450 may include a speaker 451 and/or at least one enclosure 452.

According to an embodiment, the speaker 451 may be configured to output audio for being transmitted to the outside of the electronic device 400. For example, the speaker 451 may be configured to output audio through a surface 451a of the speaker 451. For example, the speaker 451 may include a diaphragm, a coil, and/or a magnet for outputting audio. As a current is applied to the coil within the speaker 451, the coil and the magnet may interact. As the diaphragm vibrates at a specified frequency by the interaction between the coil and the magnet, air adjacent to the diaphragm may vibrate. Audio having a specified frequency may be emitted from the speaker 451 by vibration of the air adjacent to the diaphragm. For example, the speaker 451 may output audio for a call with a user of an external electronic device to the outside of the electronic device 400. However, it is not limited thereto. According to an embodiment, the speaker 451 may be disposed on the supporting member 410. For example, the surface 451a of the speaker 451 may face the other surface 410b of the supporting member 410. For example, a direction (e.g., +z direction) in which the surface 451a of the speaker 451 faces may be opposite to a direction (e.g., -z direction) in which the other surface 410b of the supporting member 410 faces. According to an embodiment, the speaker 451 may be disposed in one of the first region 411 and the second region 412 of the supporting member 410. For example, at least a portion of the speaker 451 may be disposed in the first region 411.

According to an embodiment, the at least one enclosure 452 may accommodate the speaker 451. For example, the at least one enclosure 452 may cover the speaker 451. For example, the at least one enclosure 452 may surround the speaker 451. According to an embodiment, the at least one enclosure 452 may be configured to provide a resonance space. The amplitude of the audio emitted from the speaker 451 may increase by resonating within the resonance space provided by the at least one enclosure 452. According to an embodiment, the at least one enclosure 452 may include a first enclosure 452a, a second enclosure 452b, and/or a through hole 452c.

According to an embodiment, the first enclosure 452a may surround a portion of the speaker 451. According to an embodiment, the first enclosure 452a may be disposed on the surface 451a of the speaker 451. For example, the first enclosure 452a may be spaced apart from the surface 451a of the speaker 451, but is not limited thereto. For example, the first enclosure 452a may be in contact with the surface 451a of the speaker 451.

According to an embodiment, the second enclosure 452b may surround another portion of the speaker 451. According to an embodiment, the second enclosure 452b may be coupled to the first enclosure 452a. As the second enclosure 452b and the first enclosure 452a are coupled to each other, a resonance space in the speaker 451 may be formed.

According to an embodiment, the through hole 452c may provide a passage through which audio emitted from the speaker 451 may move to the outside of the supporting member 410. According to an embodiment, the through hole 452c may be formed on the surface 451a of the speaker 451. For example, the through hole 452c may penetrate the first enclosure 452a. The audio emitted from the speaker 451 may be transmitted to the outside of the supporting member 410 by passing through the through hole 452c.

According to an embodiment, the supporting member 410 may include a first audio hole 414, a second audio hole 415, a first audio path 416, and/or a second audio path 417.

According to an embodiment, the first audio hole 414 may transmit a portion of the audio emitted from the speaker 451 to the first audio path 416. For example, the first audio hole 414 may connect an internal space of the speaker module 450 in which the speaker 451 is disposed and the first audio path 416. According to an embodiment, the first audio hole 414 may penetrate the supporting member 410. For example, the first audio hole 414 may penetrate the surface 410a of the supporting member 410. For example, the first audio hole 414 may extend from the surface 410a of the supporting member 410 to the other surface 410b of the supporting member 410. According to an embodiment, the first audio hole 414 may be disposed on (e.g., the +z-axis direction) the speaker 451. For example, the first audio hole 414 may be disposed on (e.g., +z-axis direction) the surface 451a of the speaker 451. For example, the first audio hole 414 may be formed in the first region 411 so that a position of the first audio hole 414 corresponds to a position of the speaker 451 disposed in the first region 411. For example, a portion of the audio outputted through the surface 451a of the speaker 451 may be transmitted to the first audio path 416 through the first audio hole 414.

According to an embodiment, the second audio hole 415 may transmit another portion of the audio emitted from the speaker 451 to the second audio path 417. For example, the second audio hole 415 may connect the second audio path 417 to the internal space of the speaker module 450 in which the speaker 451 is disposed. According to an embodiment, the second audio hole 415 may penetrate the supporting member 410. For example, the second audio hole 415 may extend from the surface 410a of the supporting member 410 to the other surface 410b of the supporting member 410. According to an embodiment, the second audio hole 415 may be disposed on the speaker 451. For example, the second audio hole 415 may be disposed within the first region 411 of the supporting member 410 such that a position of the second audio hole 415 corresponds to a position of the speaker 451 disposed within the first region 411. For example, the second audio hole 415 may be disposed on (e.g., +z-axis direction) the surface 451a of the speaker 451. The other portion of the audio outputted through the surface 451a of the speaker 451 may be transmitted to the second audio path 417 through the second audio hole 415. According to an embodiment, the second audio hole 415 may be separated from the first audio hole 414. The second audio hole 415 may be spaced apart from the first audio hole 414. For example, the second audio hole 415 may be spaced apart from the first audio hole 414 along the second direction (e.g., +x direction). However, it is not limited thereto. For example, the second audio hole 415 may be separated by a specified distance from the first audio hole 414 along the second direction (e.g., +x direction) and a specified distance along a direction (e.g., -y direction or +y direction) perpendicular to the second direction. According to an embodiment, a size of the second audio hole 415 may be different from a size of the first audio hole 414. For example, the area of the second audio hole 415 may be different from the area of the first audio hole 414, but is not limited thereto. For example, the area of the first audio hole 414 may be substantially the same as the area of the second audio hole 415.

According to an embodiment, the first audio path 416 may transmit audio outputted from the speaker 451 through the first audio hole 414 to the outside of the supporting member 410. The first audio path 416 may be connected to the first audio hole 414. For example, an end 416a of the first audio path 416 may be connected to the first audio hole 414. The first audio path 416 may extend from the first audio hole 414 to the outside of the supporting member 410. For example, the audio outputted from the speaker 451 through the first audio hole 414 may be transmitted to the outside of the supporting member 410 through another end 416b of the first audio path 416. The other end 416b of the first audio path 416 may be opposite to the end 416a of the first audio path 416. According to an embodiment, the other end 416b of the first audio path 416 may be connected to the notch 422 of the display 420. For example, when the supporting member 410 is viewed from above, the other end 416b of the first audio path 416 may overlap the notch 422 of the display 420. For example, the other end 416b of the first audio path 416 may be disposed under the notch 422 of the display 420. As the first audio path 416 and the notch 422 are connected, the audio transmitted from the speaker 451 to the first audio path 416 may be transmitted to the outside of the electronic device 400 along the notch 422. However, it is not limited thereto, and the audio transmitted to the first audio path 416 may be transmitted to the outside of the electronic device 400 through a component other than the notch 422. For example, although not illustrated in FIGS. 4A, 4B, and 4C, the other end 416b of the first audio path 416 may be connected to a speaker hole (e.g., the speaker hole 207 of FIG. 2) exposed to the outside of the electronic device 400. According to an embodiment, the at least a portion of the first audio path 416 may be disposed around at least a portion of the sensor 430. For example, at least a portion of the first audio path 416 may surround at least a portion of the sensor 430. According to an embodiment, the first audio path 416 may be disposed within the first region 411. The first audio path 416 may extend within the first region 411. The first audio path 416 may extend within the first region 411 from among the first region 411 and the second region 412.

According to an embodiment, the second audio path 417 may transmit audio outputted from the speaker 451 through the second audio hole 415 to the outside of the supporting member 410. The second audio path 417 may be connected to the second audio hole 415. For example, an end 417a of the second audio path 417 may be connected to the second audio hole 415. The second audio path 417 may extend from the second audio hole 415 to the outside of the supporting member 410. For example, the audio outputted from the speaker 451 through the second audio hole 415 may be transmitted to the outside of the supporting member 410 through another end 417b of the second audio path 417. The other end 417b of the second audio path 417 may be opposite to the end 417a of the second audio path 417. According to an embodiment, the other end 417b of the second audio path 417 may be connected to the notch 422 of the display 420. For example, when the supporting member 410 is viewed from above, the other end 417b of the second audio path 417 may overlap the notch 422 of the display 420. For example, the other end 417b of the second audio path 417 may be disposed under the notch 422 of the display 420. As the second audio path 417 and the notch 422 are connected, audio transmitted from the speaker 451 to the second audio path 417 may be transmitted to the outside of the electronic device 400 along the notch 422. However, it is not limited thereto, and the audio transmitted to the second audio path 417 may be transmitted to the outside of the electronic device 400 through a component other than the notch 422. For example, although not illustrated in FIGS. 4A, 4B, and 4C, the other end 417b of the second audio path 417 may be connected to a speaker hole (e.g., the speaker hole 207 of FIG. 2) exposed to the outside of the electronic device 400. According to an embodiment, at least a portion of the second audio path 417 may be disposed around at least a portion of the sensor 430. For example, at least a portion of the second audio path 417 may surround at least a portion of the sensor 430. According to an embodiment, the second audio path 417 may extend from the first region 411 to the second region 412. A portion of the second audio path 417 may be disposed within the first region 411, and another portion of the second audio path 417 may be disposed within the second region 412. For example, the end 417a of the second audio path 417 may be connected to the second audio hole 415 disposed within the first region 411. For example, the other end 417b of the second audio path 417 may be disposed within the second region 412. For example, the other end 417b of the second audio path 417 may be connected to another portion of the notch 422 disposed within the second region 412. For example, when the first audio path 416 is omitted, the audio outputted from the speaker 451 may be transmitted to the outside of the supporting member 410 through the other end 417b of the second audio path 417 disposed within the second region 412. When the audio outputted from the speaker 451 is transmitted to the outside of the supporting member 410 only through the second region 412, as the audio from the speaker 451 is outputted at a position spaced apart from a center of the supporting member 410, a size of audio transmitted to the user may vary by a change in an angle at which the user grips the electronic device 400. Since the other end 416b of the first audio path 416 is disposed within the first region 411, and the other end 417b of the second audio path 417 is disposed within the second region 412, the electronic device 400 according to an embodiment may provide a structure capable of providing audio independently of an angle at which the user grips the electronic device 400.

According to an embodiment, a straight-line distance between the other end 416b of the first audio path 416 and the speaker 451 may be different from a straight-line distance between the other end 417b of the second audio path 417 and the speaker 451. For example, when the supporting member 410 is viewed from above, the straight-line distance from the other end 416b of the first audio path 416 to the speaker 451 may be different from the straight-line distance from the other end 417b of the second audio path 417 to the speaker 451. For example, when the supporting member 410 is viewed from above, a straight-line distance from the end 416a of the first audio path 416 connected to the first audio hole 414 to the other end 417b of the first audio path 416 may be different from a straight-line distance from the end 417a of the second audio path 417 connected to the second audio hole 415 to the other end 417b of the second audio path 417. For example, the straight-line distance may mean a shortest distance between the end 416a of the first audio path 416 and the other end 416b of the first audio path 416. For example, the straight-line distance may mean a shortest distance between the end 417a of the second audio path 417 and the other end 417b of the second audio path 417.

According to an embodiment, the sensor 430 may be disposed between the first audio path 416 and the second audio path 417. For example, the sensor 430 may be surrounded by the first audio path 416 and the second audio path 417. According to an embodiment, a distance between the sensor 430 and the other end 417b of the second audio path 417 may be substantially the same as a distance between the sensor 430 and the other end 416b of the first audio path 416. For example, the distance between the other end 417b of the second audio path 417 and the sensor 430 in the second direction (e.g., +x direction) may be substantially the same as the distance between the other end 416b of the first audio path 416 and the sensor 430 in the first direction (e.g., -x direction). However, it is not limited thereto. For example, the distance between the sensor 430 and the other end 417b of the second audio path 417 may be different from the distance between the sensor 430 and the other end 416b of the first audio path 416.

According to an embodiment, the second audio path 417 may be separated from the first audio path 416. For example, the second audio path 417 may be spaced apart from the first audio path 416. For example, the second audio path 417 may be spaced apart from the first audio path 416 along the second direction (e.g., +x direction). According to an embodiment, a first length 11, which is a length of the first audio path 416, may be defined as a length of an imaginary line connecting centers of cross-sectional areas on the first audio path 416 located between the end 416a of the first audio path 416 and the other end 416b of the first audio path 416. For example, the first length l1 may be defined as a length of an imaginary line connecting a center of cross-sectional area of the first audio hole 414 connected to the end 416a of the first audio path 416 to a center of cross-sectional area of the other end 416b of the first audio path 416. According to an embodiment, a second length l2, which is a length of the second audio path 417, may be defined as a length of an imaginary line connecting centers of cross-sectional areas on the second audio path 417 located between the end 417a of the second audio path 417 and the other end 417b of the second audio path 417. For example, the second length l2 may be defined as a length of an imaginary line connecting a center of cross-sectional area of the second audio hole 415 connected to the end 417a of the second audio path 417 to a center of cross-sectional area of the other end 417b of the second audio path 417. According to an embodiment, the first length 11 of the first audio path 416 may correspond to the second length l2 of the second audio path 417. For example, the first length l1 of the first audio path 416 may be substantially the same as the second length l2 of the second audio path 417. However, it is not limited thereto. For example, the first length 11 and the second length l2 may be different so that destructive interference between audio emitted from the other end 416b of the first audio path 416 and audio emitted from the other end 417b of the second audio path 417 is reduced. For example, when the second audio hole 415 is omitted, both the first audio path 416 and the second audio path 417 may extend from the first audio hole 414. When the first audio path 416 and the second audio path 417 extend from the first audio hole 414, as the end 416a of the first audio path 416 and the end 417a of the second audio path 417 are connected to each other, the first length 11 may be different from the second length l2. When the first length l1 and the second length l2 becomes different, as destructive interference occurs between audio emitted from the other end 416b of the first audio path 416 and audio emitted from the other end 417b of the second audio path 417, a sound pressure of audio within a specific frequency band transmitted to the outside of the supporting member 410 may be reduced. When the end 416a of the first audio path 416 and the end 417a of the second audio path 417 are connected to each other, a shape of one of the first audio path 416 and the second audio path 417 may become complicated to change one of the first length 11 and the second length l2. When the shape of one of the first audio path 416 and the second audio path 417 becomes complicated, a production of the supporting member 410 may become complicated. Since the first audio path 416 and the second audio path 417 are separated from each other, the electronic device 400 according to an embodiment may provide a structure in which one of the first length 11 and the second length l2 is easily changed when the electronic device 400 is manufactured. For example, since the first audio path 416 extends from the first audio hole 414, and the second audio path 417 extends from the second audio hole 415 separated from the first audio hole 414, the first length 11 and the second length l2 may be easily changed by changing positions of the first audio hole 414 and the second audio hole 415 when the electronic device 400 is manufactured.

According to an embodiment, the cover portion 413 may cover the sensor 430. The cover portion 413 may separate the first audio path 416 and the second audio path 417. The cover portion 413 may be disposed between the first audio path 416 and the second audio path 417. For example, the cover portion 413 may separate the first audio path 416 and the second audio path 417, by extending, on the surface 410a of the supporting member 410, from between the first audio hole 414 and the second audio hole 415.

According to an embodiment, the first audio path 416 may be disposed between the supporting member 410 and the display 420. The first audio path 416 may be disposed on the surface 410a of the supporting member 410. According to an embodiment, the first audio path 416 may be defined by the cover portion 413 and at least one waterproof member 440. For example, when the first audio path 416 forms substantially one plane with the surface 410a of the supporting member 410, the first audio path 416 may be defined by the cover portion 413 protruding from the surface 410a of the supporting member 410 and the waterproof member 440 disposed on the surface 410a of the supporting member 410. However, it is not limited thereto. For example, the first audio path 416 may be formed as the surface 410a of the supporting member 410 is recessed inward. The first audio path 416 may be surrounded by the cover portion 413 and the at least one waterproof member 440. The first audio path 416 may be surrounded by the cover portion 413 and the at least one waterproof member 440. For example, a periphery of the first audio path 416 may be surrounded by the at least one waterproof member 440, and another periphery of the first audio path 416 may be surrounded by the cover portion 413.

According to an embodiment, the second audio path 417 may be disposed between the supporting member 410 and the display 420. The second audio path 417 may be disposed on the surface 410a of the supporting member 410. According to an embodiment, the second audio path 417 may be defined by the cover portion 413 and the at least one waterproof member 440. For example, when the second audio path 417 forms substantially one plane with the surface 410a of the supporting member 410, the second audio path 417 may be defined by the cover portion 413 protruding from the surface 410a of the supporting member 410 and the waterproof member 440 disposed on the surface 410a of the supporting member 410. However, it is not limited thereto. For example, the first audio path 416 may be formed as the surface 410a of the supporting member 410 is recessed inward. The second audio path 417 may be covered by the cover portion 413 and the at least one waterproof member 440. The second audio path 417 may be surrounded by the cover portion 413 and the at least one waterproof member 440. For example, a periphery of the second audio path 417 may be surrounded by the at least one waterproof member 440, and another periphery of the second audio path 417 may be surrounded by the cover portion 413.

As described above, according to an embodiment, when the electronic device 400 is manufactured by the first audio hole 414 and the first audio path 416 respectively extending from the second audio hole 415 and the second audio path 417, the electronic device 400 may provide a structure in which the first length 11 of the first audio path 416 and the second length l2 of the second audio path 417 are easily changed.

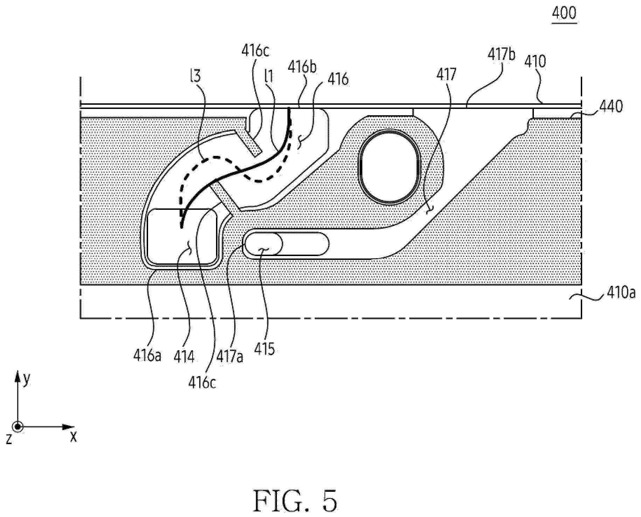

FIG. 5 is a top plan view of an exemplary electronic device according to an embodiment.

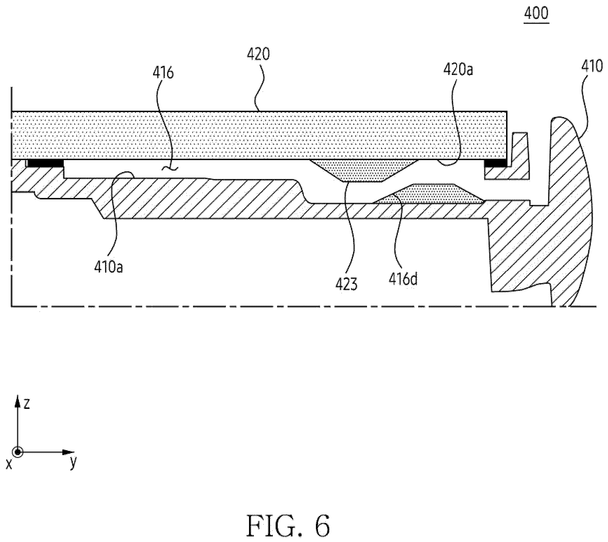

Referring to FIG. 5, according to an embodiment, audio transmitted from a speaker (e.g., the speaker 451 of FIGS. 4A, 4B, and 4C) to the first audio hole 414 may be transmitted from the end 416a of the first audio path 416 to the other end 416b of the first audio path 416. Audio transmitted from the speaker 451 to the second audio hole 415 may be transmitted from the end 417a of the second audio path 417 to the other end 417b of the second audio path 417. According to an embodiment, the electronic device 400 may include at least one first partition wall 416c. The at least one first partition wall 416c may delay movement of audio from the speaker 451 in at least one of the first audio path 416 and the second audio path 417. According to an embodiment, the at least one first partition wall 416c may be disposed in at least one of the first audio path 416 and the second audio path 417. For example, the at least one first partition wall 416c may be disposed within the first audio path 416. For example, the at least one first partition wall 416c may be disposed within the second audio path 417. For example, the at least one first partition wall 416c may include a plurality of first partition walls spaced apart from each other, but is not limited thereto. According to an embodiment, the at least one first partition wall 416c may extend from the outside of the first audio path 416 in a direction facing the inside of the first audio path 416. The at least one first partition wall 416c may extend from the outside of the second audio path 417 in a direction facing the inside of the second audio path 417. For example, the at least one first partition wall 416c may extend from the surface 410a of the supporting member 410 in a direction (e.g., +z direction) in which the surface 410a of the supporting member 410 faces. For example, the at least one first partition wall 416c may be in contact with a display (e.g., the display 420 of FIG. 4A and FIG. 4B) by extending from the surface 410a of the supporting member 410. However, it is not limited thereto, and the at least one first partition wall 416c may be spaced apart from the display 420 as described later in FIG. 6. According to an embodiment, the at least one first partition wall 416c may include a protruding member disposed on the supporting member 410.

According to an embodiment, as the at least one first partition wall 416c is disposed within the first audio path 416, a length of the first audio path 416 may increase from a first length l1 to a third length l3. For example, as audio collides with the at least one first partition wall 416c within the first audio path 416, a time for which audio is transmitted from the speaker 451 to the other end 416b of the first audio path 416 may be increased compared to a case that the at least one first partition wall 416c is omitted. As the time for which audio is transmitted from the speaker 451 to the other end 416b of the first audio path 416 is increased, the length of the first audio path 416 may be substantially increased.

As described above, according to an embodiment, when the electronic device 400 is manufactured, the electronic device 400 may provide a structure in which the length of the first audio path 416 and the length of the second audio path 417 are easily changed, by the at least one first partition wall 416c substantially increasing the length of the first audio path 416.

FIG. 6 is a cross-sectional view illustrating an example of an exemplary electronic device according to an embodiment, cut along line A-A' of FIG. 4A.

Referring to FIG. 6, according to an embodiment, at least one first partition wall 416d may be spaced apart from a display 420. When the at least one first partition wall 416d and the display 420 are spaced apart from each other, audio from a speaker (e.g., the speaker 451 of FIGS. 4A, 4B, and 4C) may move along an outer surface of the at least one first partition wall 416d. As the audio from the speaker 451 moves along the outer surface of the at least one first partition wall 416d, a time for which the audio is transmitted from the speaker 451 to the outside of the supporting member 410 may be increased.

The electronic device 400 according to an embodiment may include at least one second partition wall 423. The at least one second partition wall 423 may delay movement of audio from the speaker 451 in at least one of the first audio path 416 and a second audio path (e.g., the second audio path 417 of FIGS. 4A, 4B, and 4C). For example, the at least one second partition wall 423 may be disposed within the first audio path 416. For example, the at least one second partition wall 423 may be disposed within the second audio path 417. According to an embodiment, the at least one second partition wall 423 may be disposed on the surface 420a of the display 420. The at least one second partition wall 423 may be attached to the surface 420a of the display 420. The surface 420a of the display 420 may face the surface 410a of the supporting member 410. For example, the at least one second partition wall 423 may be formed of a sealing member (e.g., tape) for filling a gap between the display 420 and the supporting member 410. For example, the sealing member may include an adhesive material for attaching the display 420 to the supporting member 410. The sealing member may be referred to as an adhesive member.

According to an embodiment, the audio from the speaker 451 may move along an outer surface of the at least one second partition wall 423. As the audio moves along the at least one second partition wall 423, a time for which the audio is transmitted from the speaker 451 to the outside of the supporting member 410 may be increased. As the time for which the audio is transmitted from the speaker 451 to the outside of the supporting member 410 is increased, a length of the first audio path 416 may be substantially increased.

As described above, according to an embodiment, when the electronic device 400 is manufactured, the electronic device 400 may provide a structure in which a length of the first audio path 416 or a length of the second audio path 417 may be easily changed by the at least one second partition wall 423 that increases a length of at least one of the first audio path 416 and the second audio path 417.

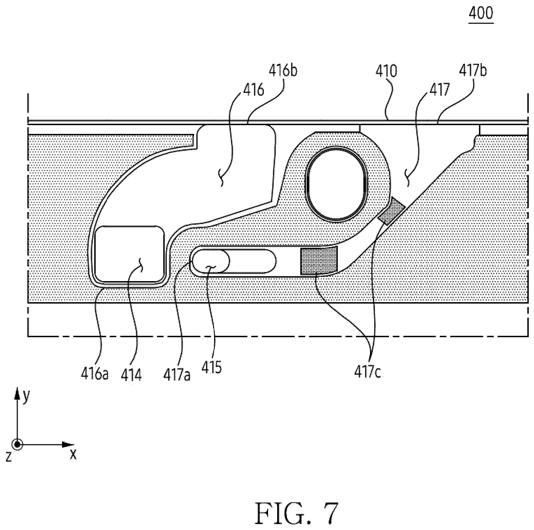

FIG. 7 is a top plan view of an exemplary electronic device according to an embodiment.

Referring to FIG. 7, according to an embodiment, audio transmitted from a speaker (e.g., the speaker 451 of FIGS. 4A, 4B, and 4C) to the first audio hole 414 may be transmitted from the end 416a of the first audio path 416 to the other end 416b of the first audio path 416. Audio transmitted from the speaker 451 to the second audio hole 415 may be transmitted from the end 417a of the second audio path 417 to the other end 417b of the second audio path 417.

According to an embodiment, the electronic device 400 may include an absorption member 417c. The absorption member 417c may reduce a sound pressure of audio in a specific frequency band outputted from the speaker 451. For example, the absorption member 417c may absorb audio within a specific frequency band among audio from the speaker 451, and pass audio outside the specific frequency band. For example, the audio within the specific frequency band may mean audio within a frequency band in which destructive interference occurs due to a length difference between the first audio path 416 and the second audio path 417. For example, when the specific frequency band is a high band, the absorption member 417c may be referred to as a low pass filter (LPF).

According to an embodiment, the absorption member 417c may be disposed in at least one of the first audio path 416 and the second audio path 417. For example, the absorption member 417c may be disposed in the first audio path 416. For example, the absorption member 417c may be disposed in the second audio path 417.

As described above, according to an embodiment, the electronic device 400 may provide a structure capable of reducing the destructive interference of audio occurring outside the supporting member 410 by the absorption member 417c that removes a specific frequency band.

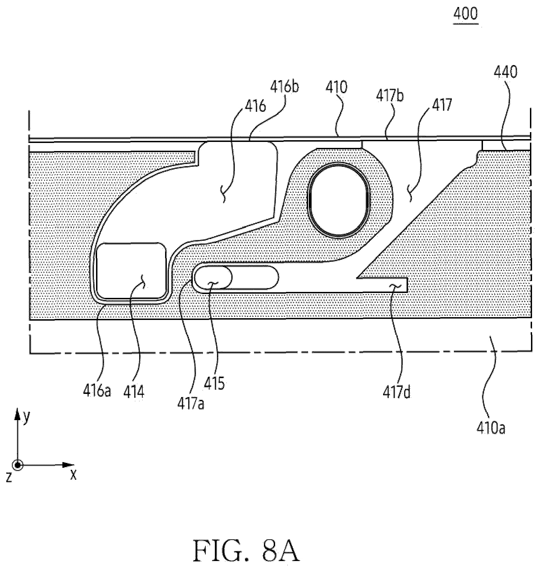

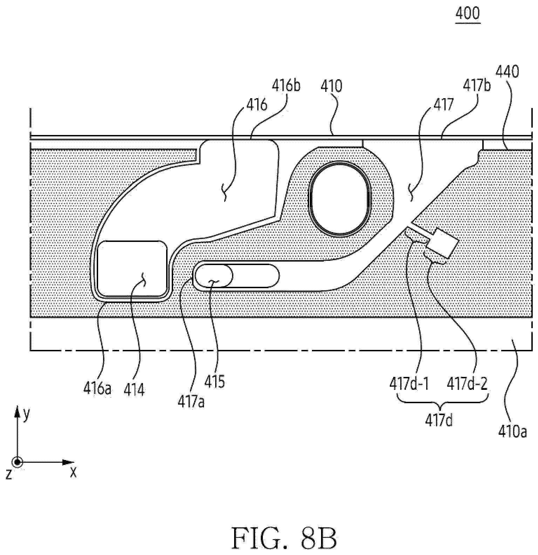

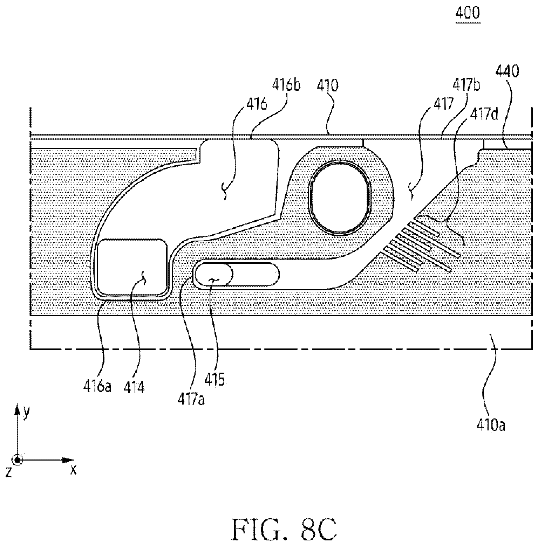

FIG. 8A is a top plan view of an exemplary electronic device according to an embodiment, FIG. 8B is a top plan view of an exemplary electronic device according to an embodiment, and FIG. 8C is a top plan view of an exemplary electronic device according to an embodiment.

Referring to FIGS. 8A, 8B, and 8C, according to an embodiment, audio transmitted from a speaker (e.g., the speaker 451 of FIGS. 4A, 4B, and 4C) to the first audio hole 414 may be transmitted from the end 416a of the first audio path 416 to the other end 416b of the first audio path 416. Audio transmitted from the speaker 451 to the second audio hole 415 may be transmitted from the end 417a of the second audio path 417 to the other end 417b of the second audio path 417.

According to an embodiment, the electronic device 400 may include an acoustic space 417d. The acoustic space 417d may reduce a sound pressure of a portion of the audio outputted from the speaker 451. For example, the acoustic space 417d may reduce a sound pressure of a portion of audio within a specific frequency band through Helm Holtz resonance. The audio within the specific frequency band may mean audio within a frequency band in which destructive interference occurs due to a length difference between the first audio path 416 and the second audio path 417. For example, the acoustic space 417d may reduce the sound pressure of a portion of the audio from the speaker 451 through reflected waves reflected within the acoustic space 417d. According to an embodiment, as a portion of the at least one waterproof member 440 is penetrated, the acoustic space 417d may be formed. For example, as a portion of the at least one waterproof member 440 is cut, the acoustic space 417d may be formed. As a portion of the at least one waterproof member 440 is recessed inward, it may be formed. However, it is not limited thereto. For example, as the surface 410a of the supporting member 410 is recessed inward, the acoustic space 417d may be formed.

According to an embodiment, the acoustic space 417d may be connected to at least one of the first audio path 416 and the second audio path 417. For example, the acoustic space 417d may be connected to the first audio path 416. For example, the acoustic space 417d may be connected to the second audio path 417. Hereinafter, it is described that the acoustic space 417d is connected to the second audio path 417, but this is for convenience of explanation. For example, the acoustic space 417d may be connected to the first audio path 416.

According to an embodiment, the acoustic space 417d may be disposed between the end 417a of the second audio path 417 and the other end 417b of the second audio path 417. For example, referring to FIG. 8A, the acoustic space 417d may have a shape extending along a second direction (e.g., +x direction) between the end 417a of the second audio path 417 and the other end 417b of the second audio path 417. However, it is not limited thereto.

Referring to FIG. 8B, according to an embodiment, the acoustic space 417d may extend in a direction inclined with respect to the second direction (e.g., +x direction). According to an embodiment, as the acoustic space 417d extends, a size of the acoustic space 417d may be changed. A size of a portion 417d-1 of the acoustic space 417d connected to the second audio path 417 may be different from a size of another portion 417d-2 of the acoustic space 417d connected to the portion 417d-1 of the acoustic space 417d. For example, the size of the portion 417d-1 of the acoustic space 417d connected to the second audio path 417d may be smaller than the size of the other portion 417d-2 of the acoustic space 417d connected to the portion 417d-1 of the acoustic space 417d.

Referring to FIG. 8C, according to an embodiment, the acoustic space 417d may include a plurality of slits. The plurality of slits may be spaced apart from each other. For example, the plurality of slits may extend in a direction inclined with respect to the second direction (e.g., +x direction). According to an embodiment, the plurality of slits may have different lengths. For example, lengths of the plurality of slits extending in a direction inclined with respect to the second direction (e.g., +x direction) may vary.

As described above, according to an embodiment, the electronic device 400 may provide a structure capable of reducing the destructive interference of audio occurring outside the supporting member 410 by the acoustic space 417d that reduces a sound pressure of a portion of audio outputted from the speaker 451.

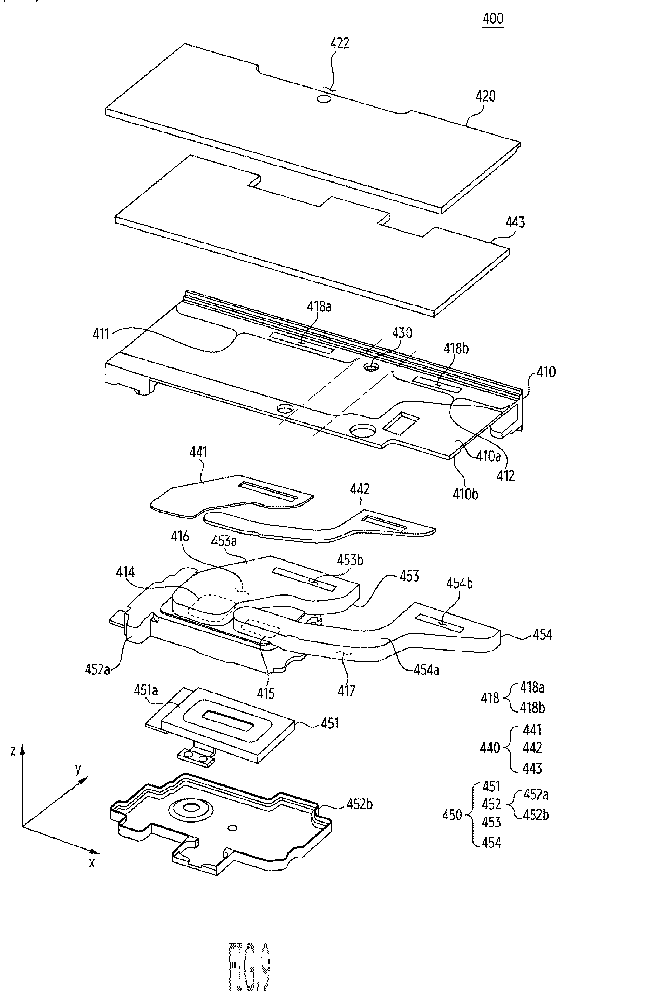

FIG. 9 is an exploded perspective view of an exemplary electronic device according to an embodiment.

Referring to FIG. 9, according to an embodiment, a speaker module 450 may include a first audio duct member 453 and/or a second audio duct member 454. The first audio duct member 453 may be coupled to at least one enclosure 452. For example, the first audio duct member 453 may be coupled to a first enclosure 452a. For example, the first audio duct member 453 may be disposed on the first enclosure 452a. According to an embodiment, the first audio duct member 453 may define a first audio path 416. For example, the first audio duct member 453 may cover the first audio path 416. For example, the first audio duct member 453 may surround the first audio path 416. According to an embodiment, the first audio duct member 453 may be disposed on the first audio hole 414 disposed in the first enclosure 452a. The first audio duct member 453 may cover the first audio hole 414 disposed in the first enclosure 452a. According to an embodiment, the first audio duct member 453 may be disposed under the supporting member 410. The first audio duct member 453 may be disposed on the other surface 410b of the supporting member 410. For example, a surface 453a of the first audio duct member 453 may face the other surface 410b of the supporting member 410. A direction (e.g., +z direction) in which the surface 453a of the first audio duct member 453 faces may be opposite to a direction (e.g., -z direction) in which the other surface 410b of the supporting member 410 faces. The direction (e.g., +z direction) in which the surface 453a of the first audio duct member 453 faces may be substantially the same as the direction (e.g., +z direction) in which the surface 451a of the speaker 451 faces.

According to an embodiment, the first audio duct member 453 may extend within the first region 411. For example, the first audio duct member 453 may extend from the speaker 451 disposed within the first region 411. For example, the first audio duct member 453 may extend from the first audio hole 414 disposed in the first region 411. The first audio duct member 453 may extend within the first region 411 from among the first region 411 and the second region 412. According to an embodiment, the first audio duct member 453 may be disposed around at least a portion of the sensor 430. For example, at least a portion of the first audio duct member 453 may surround the sensor 430.

According to an embodiment, the first audio duct member 453 may include a first output hole 453b. The first output hole 453b may penetrate the surface 453a of the first audio duct member 453. Audio outputted from the speaker 451 may move along the first audio path 416 surrounded by the first audio duct member 453. The audio moved along the first audio path 416 may be transmitted to the outside of the speaker module 450 through the first output hole 453b.

According to an embodiment, the second audio duct member 454 may be coupled to at least one enclosure 452. For example, the second audio duct member 454 may be coupled to the first enclosure 452a. For example, the second audio duct member 454 may be disposed on the first enclosure 452a. According to an embodiment, the second audio duct member 454 may define a second audio path 417. For example, the second audio duct member 454 may cover the second audio path 417. For example, the second audio duct member 454 may surround the second audio path 417. According to an embodiment, the second audio duct member 454 may be disposed on the second audio hole 415 disposed in the first enclosure 452a. The second audio duct member 454 may cover the second audio hole 415 disposed in the first enclosure 452a. According to an embodiment, the second audio duct member 454 may be disposed under the supporting member 410. The second audio duct member 454 may be disposed on the other surface 410b of the supporting member 410. For example, the surface 454a of the second audio duct member 454 may face the other surface 410b of the supporting member 410. A direction (e.g., +z direction) in which the surface 454a of the second audio duct member 454 faces may be opposite to a direction (e.g., -z direction) in which the other surface 410b of the supporting member 410 faces. The direction (e.g., +z direction) in which the surface 454a of the second audio duct member 454 faces may be substantially the same as the direction (e.g., +z direction) in which the surface 451a of the speaker 451.

According to an embodiment, the second audio duct member 454 may extend from the first region 411 to the second region 412. A portion of the second audio duct member 454 may be disposed within the first region 411, and another portion of the second audio duct member 454 may be disposed within the second region 412. For example, a portion of the second audio duct member 454 may extend from the second audio hole 415 disposed within the first region 411. For example, a portion of the second audio duct member 454 may extend from the speaker 451 disposed within the first region 411. According to an embodiment, at least a portion of the second audio duct member 454 may be disposed around the sensor 430. For example, at least a portion of the second audio duct member 454 may surround the sensor 430.

According to an embodiment, the second audio duct member 454 may include a second output hole 454b. The second output hole 454b may penetrate the surface 454a of the second audio duct member 454. The audio outputted from the speaker 451 may move along the second audio path 417 surrounded by the second audio duct member 454. The audio moved along the second audio path 417 may be transmitted to the outside of the speaker module 450 through the second output hole 454b.

According to an embodiment, the supporting member 410 may include at least one emission hole 418. The at least one emission hole 418 may provide a passage through which audio from the speaker module 450 may move to the outside of the supporting member 410. According to an embodiment, the at least one emission hole 418 may include a first emission hole 418a and a second emission hole 418b. The first emission hole 418a may transmit audio from the first audio duct member 453 to the outside of the supporting member 410. For example, the first emission hole 418a may be disposed to correspond to the first output hole 453b of the first audio duct member 453. For example, a position of the first emission hole 418a may correspond to a position of the first output hole 453b. The first emission hole 418a may penetrate the supporting member 410. For example, the first emission hole 418a may extend from the surface 410a of the supporting member 410 to the other surface 410b of the supporting member 410. For example, the audio from the first output hole 453b may be moved to the outside of the supporting member 410 through the notch 422 of the display 420, by passing through the first emission hole 418a. For example, the notch 422 may be disposed on a portion of the first audio duct member 453 disposed within the first region 411. For example, the notch 422 may be disposed to correspond to a portion of the first audio duct member 453 in which the first emission hole 418a is disposed. The second emission hole 418b may transmit audio from the second audio duct member 454 to the outside of the supporting member 410. For example, the second emission hole 418a may be disposed to correspond to the second output hole 454b of the second audio duct member 454. For example, a position of the second emission hole 418b may correspond to a position of the second output hole 454b. The second emission hole 418b may penetrate the supporting member 410. For example, the second emission hole 418b may extend from the surface 410a of the supporting member 410 to the other surface 410b of the supporting member 410. According to an embodiment, the second emission hole 418b may be separated from the first emission hole 418a. The second emission hole 418b may be spaced apart from the first emission hole 418a. For example, the second emission hole 418b may be spaced apart from the first emission hole 418a in a second direction (e.g., +x direction). For example, the audio from the second output hole 454b may be moved to the outside of the supporting member 410 through the notch 422 of the display 420 by passing through the second emission hole 418b. For example, the notch 422 may be disposed to correspond to a portion of the second audio duct member 454 disposed within the second region 412. For example, the notch 422 may be disposed on a portion of the second audio duct member 454 in which the second emission hole 418b is disposed.

According to an embodiment, the at least one waterproof member 440 may include a first waterproof member 441, a second waterproof member 442, and/or a third waterproof member 443. The first waterproof member 441 may fill a gap between the first audio duct member 453 and the supporting member 410. According to an embodiment, the first waterproof member 441 may be disposed between the other surface 410b of the supporting member 410 and the first audio duct member 453. The first waterproof member 441 may be disposed on the surface 453a of the first audio duct member 453. According to an embodiment, the first waterproof member 441 may be spaced apart from the first output hole 453b. For example, the first waterproof member 441 may surround the first output hole 453b in a state of being spaced apart from the first output hole 453b. For example, the first waterproof member 441 may not cover the first output hole 453b.

According to an embodiment, the second waterproof member 442 may fill a gap between the second audio duct member 454 and the supporting member 410. According to an embodiment, the second waterproof member 442 may be disposed between the other surface 410b of the supporting member 410 and the second audio duct member 454. The second waterproof member 442 may be disposed on the surface 454a of the second audio duct member 454. According to an embodiment, the second waterproof member 442 may be spaced apart from the second output hole 454b. For example, the second waterproof member 442 may surround the second output hole 454b in a state of being spaced apart from the second output hole 454b. For example, the second waterproof member 442 may not cover the second output hole 454b.

According to an embodiment, the third waterproof member 443 may fill a gap between the display 420 and the supporting member 410. According to an embodiment, the third waterproof member 443 may be disposed between the display 420 and the supporting member 410. The third waterproof member 443 may be disposed on the surface 410a of the supporting member 410. According to an embodiment, the third waterproof member 443 may be spaced apart from the first emission hole 418a and the second emission hole 418b of the supporting member 410. For example, the third waterproof member 443 may not cover the first emission hole 418a and the second emission hole 418b. For example, the third waterproof member 443 may include a notch corresponding to the first emission hole 418a and the second emission hole 418b, but is not limited thereto. For example, the third waterproof member 443 may include a hole corresponding to the first emission hole 418a and the second emission hole 418b.

As described above, according to an embodiment, when the electronic device 400 is manufactured, the electronic device 400 may provide a structure in which a length of the first audio path 416 and a length of the second audio path 417 are easily changed by the speaker module 450 including the first audio duct member 453 surrounding the first audio path 416, and the second audio duct member 454 surrounding the second audio path 417.

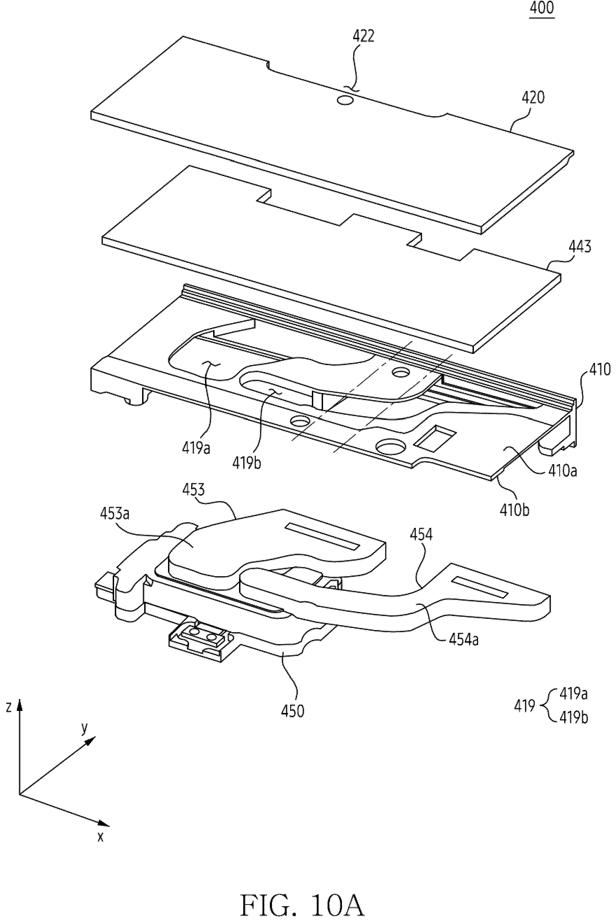

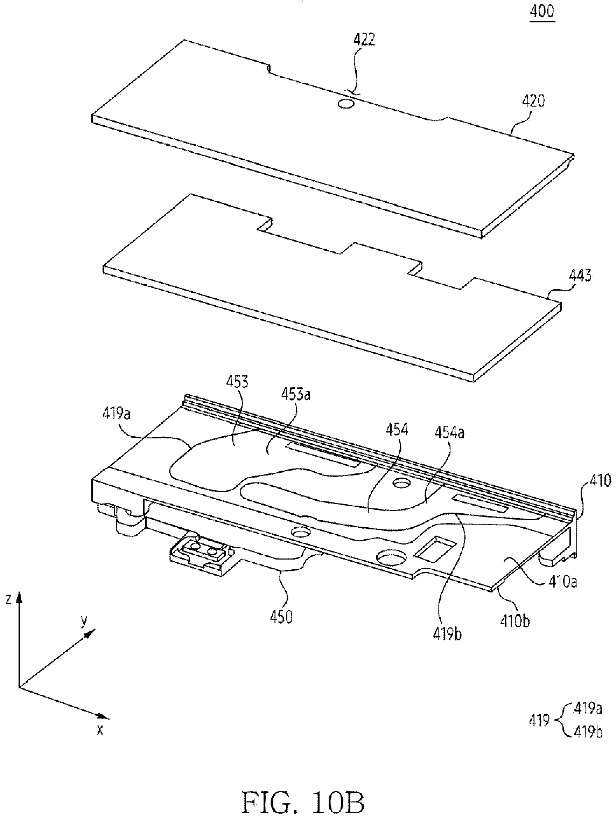

FIG. 10A is an exploded perspective view of an exemplary electronic device according to an embodiment, and FIG. 10B is an exploded perspective view of an exemplary electronic device according to an embodiment.

Referring to FIGS. 10A and 10B, according to an embodiment, the supporting member 410 may include at least one accommodation hole 419. The at least one accommodation hole 419 may accommodate a plurality of audio duct members 453 and 454. According to an embodiment, at least one accommodation hole 419 may include a first accommodation hole 419a and a second accommodation hole 419b.

According to an embodiment, the first accommodation hole 419a may accommodate the first audio duct member 453. For example, the first accommodation hole 419a may surround the first audio duct member 453. The first accommodation hole 419a may penetrate the supporting member 410. For example, the first accommodation hole 419a may extend from the surface 410a of the supporting member 410 to the other surface 410b of the supporting member 410. According to an embodiment, the first accommodation hole 419a may have a shape corresponding to the first audio duct member 453.

According to an embodiment, the second accommodation hole 419b may accommodate the second audio duct member 454. For example, the second accommodation hole 419b may surround the second audio duct member 454. The second accommodation hole 419b may penetrate the supporting member 410. For example, the second accommodation hole 419b may extend from the surface 410a of the supporting member 410 to the other surface 410b of the supporting member 410. According to an embodiment, the second accommodation hole 419b may have a shape corresponding to the second audio duct member 454.

According to an embodiment, at least a portion of the speaker module 450 may be inserted into the supporting member 410. The first audio duct member 453 may be inserted into the supporting member 410. The second audio duct member 454 may be inserted into the supporting member 410. For example, the surface 453a of the first audio duct member 453 may form substantially one plane with the surface 410a of the supporting member 410. For example, the surface 454a of the second audio duct member 454 may form substantially one plane with the surface 410a of the supporting member 410.

According to an embodiment, the third waterproof member 443 may be disposed on the first audio duct member 453 and the second audio duct member 454. For example, the third waterproof member 443 may be disposed on the surface 453a of the first audio duct member 453 and the surface 454a of the second audio duct member 454. A portion of the third waterproof member 443 may be disposed between the first audio duct member 453 and the display 420. Another portion of the third waterproof member 443 may be disposed between the second audio duct member 454 and the display 420.

As described above, according to an embodiment, since the first audio duct member 453 and the second audio duct member 454 are inserted into the supporting member 410, the electronic device 400 may secure a space in which components in the electronic device 400 may be disposed.

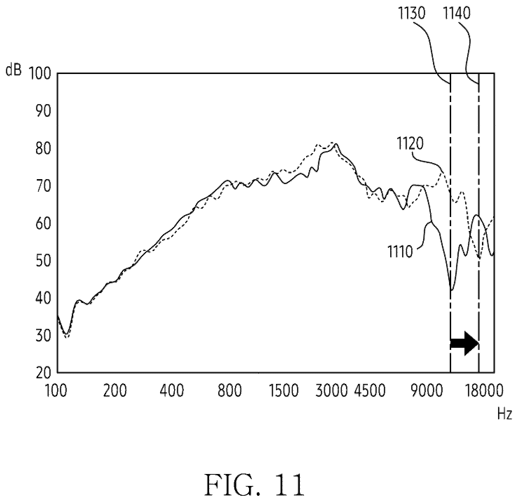

FIG. 11 is a graph illustrating an exemplary relationship between a frequency of audio outputted from a speaker and a sound pressure level, according to an embodiment.

In a graph of FIG. 11, a horizontal axis may indicate a frequency of audio outputted from a speaker (e.g., the speaker 451 of FIG. 4A, FIG. 4B, and FIG. 4C), and a vertical axis may indicate a sound pressure level (SPL) of audio outputted from the speaker 451 transmitted to the outside of the supporting member (e.g., the supporting member 410 of FIG. 4A, FIG. 4B, and FIG. 4C).

A first graph 1110 of FIG. 11 may indicate a relationship between a frequency and a sound pressure level within a state in which a first audio path (e.g., the first audio path 416 of FIGS. 4A, 4B, and 4C) and a second audio path (e.g., the second audio path 417 of FIGS. 4A, 4B, and 4C) are connected. A second graph 1120 of FIG. 11 may indicate a relationship between a frequency and a sound pressure level within a state in which the first audio path 416 and the second audio path 417 are separated from each other. For example, according to an embodiment, the second graph 1120 may indicate a relationship between a frequency and a sound pressure level when a path length difference of the first audio path 416 and the second audio path 417 is reduced.

According to an embodiment, the first graph 1110 may have a dip at a first frequency 1130. For example, in the first graph 1110, a sound pressure level of audio outputted from the speaker 451 may be decreased at the first frequency 1130. For example, in the first graph 1110, the first frequency 1130 may be referred to as a dip frequency. Through the first graph 1110, it may be identified that an electronic device (e.g., the electronic device 400 of FIGS. 4A, 4B, and 4C) may provide only audio having a narrower frequency band than the first frequency 1130 through the speaker 451 in a state in which the first audio path 416 and the second audio path 417 are connected to each other.

According to an embodiment, the second graph 1120 may have a dip at a second frequency 1140 higher than the first frequency 1130. For example, in the second graph 1120, a sound pressure level of audio outputted from the speaker 451 may be decreased at the second frequency 1140. For example, in the second graph 1120, the second frequency 1140 may be referred to as a dip frequency. Through the second graph 1120, it may be identified that the electronic device 400 may provide only audio in a frequency band smaller than the second frequency 1140 through the speaker 451 in a state in which the first audio path 416 and the second audio path 417 are separated. Since the second frequency 1140 is relatively higher than the first frequency 1130, it may be identified through the second graph 1120 that the electronic device 400 may provide audio in a relatively wide frequency band through the speaker 451 in a state in which the first audio path 416 and the second audio path 417 are separated.

As described above, according to an embodiment, since the first audio path 416 and the second audio path 417 are separated from each other, the electronic device 400 may provide a structure capable of providing audio in a relatively wide frequency band.

As various components are mounted in an electronic device, a speaker in the electronic device may be disposed in a position spaced apart from a center of the electronic device. As the speaker is disposed at the position spaced apart from the center, when there is one audio path, a size of audio transmitted to a user may vary according to an angle at which the user grips the electronic device. When the electronic device includes a plurality of audio paths extending from the speaker to the outside of the electronic device, destructive interference between audio emitted from the audio paths may occur due to a length difference between the audio paths.

According to an embodiment, an electronic device (e.g., the electronic device 400 of FIGS. 4A, 4B, and 4C) may include a supporting member (e.g., the supporting member 410 of FIGS. 4A, 4B, and 4C) including a first region (e.g., the first region 411 of FIGS. 4A, 4B, and 4C) and a second region (e.g., the second region 412 of FIGS. 4A, 4B, and 4C) spaced apart from the first region. According to an embodiment, the electronic device may include a speaker (e.g., the speaker 451 of FIGS. 4A, 4B, and 4C) disposed within the first region. According to an embodiment, the electronic device may include a first audio hole (e.g., the first audio hole 414 of FIGS. 4A, 4B, and 4C) disposed on a surface of the speaker. According to an embodiment, the electronic device may include a second audio hole (e.g., the second audio hole 415 of FIGS. 4A, 4B, and 4C) disposed on the surface of the speaker and separated from the first audio hole. According to an embodiment, the electronic device may include a first audio path (e.g., the first audio path 416 of FIGS. 4A, 4B, and 4C) extending from the first audio hole within the first region to transmit audio outputted from the speaker through the first audio hole to an outside of the electronic device. According to an embodiment, the electronic device may include a second audio path (e.g., the second audio path 417 of FIGS. 4A, 4B, and 4C) extending from the second audio hole in the first region to the second region and separated from the first audio path to transmit audio outputted from the speaker through the second audio hole to the outside of the electronic device. According to an embodiment, the sensor may be disposed between the first audio path and the second audio path.

According to an embodiment, since the first audio path extends from the first audio hole and the second audio path extends from the second audio hole, the electronic device may provide a structure in which a length of the first audio path and a length of the second audio path may be easily changed when the electronic device is manufactured.

According to an embodiment, the audio outputted from the speaker through the second audio hole may be transmitted to the outside of the electronic device independently of the audio outputted from the speaker through the first audio hole.

According to an embodiment, since the first audio hole and the second audio hole are separate from each other, the electronic device may provide a structure in which a length of the first audio path and a length of the second audio path may be easily changed when the electronic device is manufactured.

According to an embodiment, the first audio hole and the second audio hole may penetrate a surface (e.g., the surface 410a of FIGS. 4A, 4B, and 4C) of the supporting member that supports a display (e.g., the display 420 of FIGS. 4A and 4B). According to an embodiment, the first audio path and the second audio path may be disposed between the display and the supporting member.

According to an embodiment, the electronic device may provide, to a user, audio having a wide frequency bandwidth by the first audio path and the second audio path, which are disposed between the display and the supporting member.

According to an embodiment, the electronic device may further include a display including a notch (e.g., the notch 422 of FIGS. 4A, 4B, and 4C) and disposed on a surface of the supporting member. According to an embodiment, the notch may be disposed on an end of the first audio path and an end of the second audio path.

According to an embodiment, the electronic device may provide audio from the first audio path and the second audio path to the outside of the supporting member through the notch disposed in the display.

According to an embodiment, the electronic device may include a sensor (e.g., the sensor 430 of FIGS. 4A, 4B, and 4C), disposed between the first region and the second region and surrounded by the first audio path and the second audio path. According to an embodiment, the electronic device may include a display (e.g., the display 420 of FIGS. 4A, 4B, and 4C) disposed on a surface of the supporting member. According to an embodiment, the supporting member may include a cover portion (e.g., the cover portion 413 of FIG. 4B and FIG. 4C) protruding from the surface of the supporting member and covering the sensor. According to an embodiment, the cover portion may separate the first audio path and the second audio path, by extending from between the first audio hole and the second audio hole, on the surface of the supporting member.

According to an embodiment, since the first audio path and the second audio path are separated by the cover portion disposed on the sensor, the electronic device may provide a structure capable of securing a space in which components within the electronic device may be mounted.

According to an embodiment, the electronic device may include a display (e.g., the display 420 of FIGS. 4A, 4B, and 4C) disposed on a surface of the supporting member. According to an embodiment, the electronic device may include a waterproof member (e.g., the waterproof member 440 of FIGS. 4B and 4C) disposed between the display and the supporting member, and surrounding the first audio path and the second audio path. According to an embodiment, the second audio path may be defined by the cover portion and the waterproof member.

According to an embodiment, since the first audio path and the second audio path are separated by the waterproof member, the electronic device may provide a structure capable of securing a space in which components within the electronic device may be mounted.

According to an embodiment, the electronic device may include a sensor 430, disposed between the first region 411 and the second region 412 and surrounded by the first audio path 416 and the second audio path 417. According to an embodiment, the supporting member may include an opening (e.g., the opening 431a of FIG. 4B and FIG. 4C) that penetrates the supporting member and overlaps the sensor when the supporting member is viewed from above.

According to an embodiment, since the sensor is exposed through the opening formed in the supporting member, the electronic device may obtain information on the outside of the electronic device.

According to an embodiment, the electronic device may include a partition wall (e.g., the at least one first partition wall 416c of FIG. 5) disposed within at least one of the first audio path and the second audio path.

According to an embodiment, the electronic device may provide a structure in which the first audio path and the second audio path may be easily changed when the electronic device is manufactured by a partition wall disposed within one of the first audio path and the second audio path.

According to an embodiment, the electronic device may include an absorption member (e.g., the absorption member 417c of FIG. 7) disposed within at least one of the first audio path and the second audio path.

According to an embodiment, the electronic device may provide a structure capable of reducing destructive interference of audio occurring outside the supporting member by the absorption member that removes an audio signal having a specific frequency.

According to an embodiment, the second audio path may include an acoustic space (e.g., the acoustic space 417d of FIGS. 8A, 8B, and 8C) disposed between an end of the second audio path connected to the second audio hole and another end of the second audio path opposite the end of the second audio path.

According to an embodiment, the electronic device may provide a structure capable of reducing destructive interference of audio occurring outside the supporting member by an acoustic space that reduces a portion of sound pressure of an audio signal having a specific frequency.

According to an embodiment, the electronic device may include an enclosure (e.g., the at least one enclosure 452 of FIG. 9) that accommodates the speaker and includes the first audio hole and the second audio hole. According to an embodiment, the electronic device may include a first audio duct member (e.g., the first audio duct member 453 of FIG. 9) coupled to the enclosure and surrounding the first audio path. According to an embodiment, the electronic device may include a second audio duct member (e.g., the second audio duct member 454 of FIG. 9) coupled to the enclosure and surrounding the second audio path.

According to an embodiment, the electronic device may provide a structure in which a length of the first audio path and a length of the second audio path may be easily changed when the electronic device is manufactured by the first audio duct member surrounding the first audio path and the second audio duct member surrounding the second audio path.

According to an embodiment, the first audio duct member may include a first output hole (e.g., the first output hole 453b of FIG. 9) penetrating a surface of the first audio duct member facing in a direction in which the surface of the speaker faces. According to an embodiment, the second audio duct member may include a second output hole (e.g., the second output hole 454b of FIG. 9) penetrating a surface of the second audio duct member facing in a direction in which the surface of the speaker faces.

According to an embodiment, the electronic device may provide a structure capable of transmitting audio from the speaker to the outside through the first output hole and the second output hole.

According to an embodiment, the supporting member may include a surface supporting a display, and another surface opposite to the surface, a first emission hole (e.g., the first emission hole 418a of FIG. 9) extending from the surface to the other surface, and a second emission hole (e.g., the second emission hole 418b of FIG. 9) extending from the surface to the other surface and separated from the first emission hole. According to an embodiment, the first audio duct member and the second audio duct member may be disposed on the other surface of the supporting member.

According to an embodiment, the electronic device may provide a structure capable of transmitting audio from the speaker to the outside by the first emission hole and the second emission hole formed in the supporting member.

According to an embodiment, the electronic device may include a first waterproof member (e.g., the first waterproof member 441 of FIG. 9) disposed between the other surface of the supporting member and the first audio duct member. According to an embodiment, the electronic device may include a second waterproof member (e.g., the second waterproof member 442 of FIG. 9) disposed between the other surface of the supporting member and the second audio duct member.

According to an embodiment, the electronic device may provide a structure capable of filling a gap between the first audio duct member and the supporting member, and between the second audio duct member and the supporting member, by the first waterproof member and the second waterproof member.

According to an embodiment, the supporting member may include a first accommodation hole (e.g., the first accommodation hole 419a of FIGS. 10A and 10B) that extends from a surface of the supporting member supporting a display to another surface of the supporting member opposite to the surface of the supporting member and accommodates the first audio duct member. According to an embodiment, the supporting member may include a second accommodation hole (e.g., the second accommodation hole 419b of FIGS. 10A and 10B) that extends from a surface of the supporting member to the other surface of the supporting member, separated from the first receiving hole, and accommodating the second audio duct member.

According to an embodiment, the electronic device may provide a structure in which the first audio duct member and the second audio duct member may be inserted into the supporting member by the first receiving hole and the second receiving hole formed in the supporting member.

According to an embodiment, an electronic device (e.g., the electronic device 400 of FIGS. 4A, 4B, and 4C) may include a supporting member (e.g., the supporting member 410 of FIGS. 4A, 4B, and 4C) including a first region (e.g., the first region 411 of FIGS. 4A, 4B, and 4C) and a second region (e.g., the second region 412 of FIGS. 4A, 4B, and 4C) spaced from the first region. According to an embodiment, the electronic device may include a sensor (e.g., the sensor 430 of FIGS. 4A, 4B, and 4C) disposed between the first region and the second region. According to an embodiment, the electronic device may include a speaker (e.g., the speaker 451 of FIGS. 4A, 4B, and 4C) disposed within the first region. According to an embodiment, the electronic device may include an enclosure (e.g., the enclosure 452 of FIG. 9) that includes a first audio hole (e.g., the first audio hole 414 of FIGS. 4A, 4B, and 4C) disposed on the speaker, a second audio hole (e.g., the second audio hole 415 of FIGS. 4A, 4B, and 4C) separated from the first audio hole, and surrounds the speaker. According to an embodiment, the electronic device may include a first audio duct member (e.g., the first audio duct member 453 of FIG. 9) coupled to the enclosure, and extending from the first audio hole within the first region, to transmit audio outputted from the speaker through the first audio hole to the outside of the electronic device. According to an embodiment, the electronic device may include a second audio duct member (e.g., the second audio duct member 454 of FIG. 9) coupled to the enclosure, extending from the second audio hole within the first region to the second region to transmit audio outputted from the speaker through the second audio hole to the outside of the electronic device, and separated from the first audio duct member. According to an embodiment, the sensor may be disposed between the first audio duct member and the second audio duct member.

According to an embodiment, since the first audio duct member extends from the first audio hole and the second audio duct member extends from the second audio hole, the electronic device may provide a structure in which a length of the first audio path and a length of the second audio path may be easily changed when the electronic device is manufactured.

According to an embodiment, the audio outputted from the speaker through the second audio hole may be transmitted to the outside of the electronic device independently of the audio outputted from the speaker through the first audio hole.

According to an embodiment, since the first audio hole and the second audio hole are separate from each other, the electronic device may provide a structure in which a length of the first audio path and a length of the second audio path may be easily changed when the electronic device is manufactured.

According to an embodiment, the electronic device may further include a display including a notch (e.g., the notch 422 of FIGS. 4A, 4B, and 4C) and disposed on a surface of the supporting member. According to an embodiment, the notch may be disposed on a portion of the first audio duct member and a portion of the second audio duct member.

According to an embodiment, the electronic device may provide audio to the outside of the electronic device from the first audio path and the second audio path through the notch disposed in the display.

According to an embodiment, the first audio duct member may include a first output hole (e.g., the first output hole 453b of FIG. 9) penetrating a surface of the first audio duct member facing in a direction in which the surface of the speaker faces. According to an embodiment, the second audio duct member may include a second output hole (e.g., the second output hole 454b of FIG. 9) penetrating a surface of the second audio duct member facing in a direction in which the surface of the speaker faces.

According to an embodiment, the electronic device may provide a structure capable of transmitting audio from the speaker to the outside, through the first output hole and the second output hole.

According to an embodiment, the supporting member may include a surface supporting a display, and another surface opposite to the surface, a first emission hole (e.g., the first emission hole 418a of FIG. 9) extending from the surface to the other surface, and a second emission hole (e.g., the second emission hole 418b of FIG. 9) extending from the surface to the other surface and separated from the first emission hole. According to an embodiment, the first audio duct member and the second audio duct member may be disposed on the other surface of the supporting member.

According to an embodiment, the electronic device may provide a structure capable of transmitting audio from the speaker to the outside by the first emission hole and the second emission hole formed in the supporting member.

According to an embodiment, the electronic device may include a supporting member 410. According to an embodiment, the electronic device may include a speaker 451 disposed within the supporting member 410. According to an embodiment, the electronic device may include a first audio hole 414 disposed on a surface 451a of the speaker 451. According to an embodiment, the electronic device may include a second audio hole 415 disposed on the surface 451a of the speaker 451 and separated from the first audio hole 414. According to an embodiment, the electronic device may include a first audio path 416 in which an end 416a is connected to the first audio hole 414 and another end 416b is connected to the outside of the electronic device so that audio outputted through the first audio hole 414 is transmitted to the outside of the electronic device. According to an embodiment, the electronic device may include a second audio path 417 separated from the first audio path 416, in which an end 417a is connected to the second audio hole 415 and another end 417b is connected to the outside of the electronic device so that audio outputted through the second audio hole 415 is transmitted to the outside of the electronic device. According to an embodiment, a straight-line distance from the end 416a of the first audio path 416 to the other end 416b of the first audio path 416 may be different from a straight-line distance from the end 417a of the second audio path 417 to the other end 417b of the second audio path 417.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 400) comprising:
a supporting member (410) including a first region (411) and a second region (412) spaced apart from the first region (411);
a speaker (451) at least at least partially disposed in the first region (411);
a first audio hole (414) disposed on a surface (451a) of the speaker (451);
a second audio hole (415), disposed on the surface (451a) of the speaker (451), separated from the first audio hole (414);
a first audio path (416) extending within the first region (411) from the first audio hole (415) to transmit an audio outputted from the speaker (451) through the first audio hole (414) to an outside of the electronic device (101; 200; 400); and
a second audio path (417) extending from the second audio hole (415) within the first region (411) to the second region (412) to transmit an audio outputted from the speaker (451) through the second audio hole (415) to the outside of the electronic device (101; 200; 400), the second audio path (417) separated from the first audio path (416).

2. The electronic device (101; 200; 400) of claim 1,
wherein the audio outputted from the speaker (451) through the second audio hole (415) is transmitted to the outside of the electronic device (101; 200; 400) independently of the audio outputted from the speaker (451) through the first audio hole (414).

3. The electronic device (101; 200; 400) of any one of claim 1 and claim 2,
wherein the first audio hole (414) and the second audio hole (415) penetrate a surface (410a) of the supporting member (410) that supports a display (420), and
wherein the first audio path (416) and the second audio path (417) are disposed between the display (420) and the supporting member (410).

4. The electronic device (101; 200; 400) of any one of claims 1 to 3, further comprising a display (420) including a notch (422) and disposed on a surface (410a) of the supporting member (410), and
wherein the notch (422) is disposed on an end of the first audio path (416) and an end of the second audio path (417).

5. The electronic device (101; 200; 400) of any one of claims 1 to 4, further comprising:
a sensor (430), disposed between the first region (411) and the second region (412), surrounded by the first audio path (416) and the second audio path (417); and
a display (420) disposed on a surface (410a) of the supporting member (410), and
wherein the supporting member (410) further includes a cover portion (413) surrounding the sensor (430),
wherein the cover portion (413) separates first audio path (416) and the second audio path (417) by extending, from between the first audio hole (414) and the second audio hole (415), on the surface (410a) of the supporting member (410).

6. The electronic device (101; 200; 400) of any one of claims 1 to 5, further comprising:
a display (420) disposed on a surface (410a) of the supporting member (410); and
a waterproof member (440), disposed between the display (420) and the supporting member (410), surrounding the first audio path (416) and the second audio path (417), and
wherein the second audio path (417) is defined by the cover portion (413) and the waterproof member (440).

7. The electronic device (101; 200; 400) of any one of claims 1 to 6, further comprising a sensor, disposed between the first region (411) and the second region (412), surrounded by the first audio path (416) and the second audio path (417), and
wherein the supporting member (410) including an opening (413a) penetrating the supporting member (410), the opening (413a) overlapping the sensor (430) when the supporting member (410) is viewed from above.

8. The electronic device (101; 200; 400) of any one of claims 1 to 7, further comprising a partition wall disposed in at least one of the first audio path (416) or the second audio path (417).

9. The electronic device (101; 200; 400) of any one of claims 1 to 8, further comprising an absorption member (417c) disposed in at least one of the first audio path (416) or the second audio path (417).

10. The electronic device (101; 200; 400) of any one of claims 1 to 9,
wherein the second audio path (417) includes an acoustic space (417d) disposed between an end of the second audio path (417) connected to the second audio hole (415) and another end of the second audio path (417) opposite to the end of the second audio path (417).

11. The electronic device (101; 200; 400) of any one of claims 1 to 10, comprising:
an enclosure (452) accommodating the speaker (451) and including the first audio hole (414) and the second audio hole (415); and
a first audio duct member (453) coupled to the enclosure (452) and surrounding the first audio path (416); and
a second audio duct member (454) coupled to the enclosure (452) and surrounding the second audio path (417).

12. The electronic device (101; 200; 400) of any one of claims 1 to 11,
wherein the first audio duct member (453) includes a first output hole (453a) penetrating a surface (453a) of the first audio duct member (453) that faces a direction in which the surface (451a) of the speaker (451) faces, and
wherein the second audio duct member (454) includes a second output hole (453b) penetrating a surface of the second audio duct member (454) that faces a direction in which the surface (451a) of the speaker (451) faces.

13. The electronic device (101; 200; 400) of any one of claims 1 to 12,
wherein the supporting member (410) includes:
a surface (410a) supporting a display (420);
another surface (410b) opposite to the surface (410a);
a first emission hole (418a) extending from the surface (410a) to the another surface (410b); and
a second emission hole (418b) extending from the surface (410a) to the another surface (410b) and separated from the first emission hole (418a), and
wherein the first audio duct member (453) and the second audio duct member (454) are disposed on the another surface (410b) of the supporting member (410).

14. The electronic device (101; 200; 400) of any one of claims 1 to 13, further comprising:
a first waterproof member (441) disposed between the another surface (410b) of the supporting member (410) and the first audio duct member (453); and
a second waterproof member (442) disposed between the another surface (410b) of the supporting member (410) and the second audio duct member (454).

15. The electronic device (101; 200; 400) of any one of claims 1 to 14,
wherein the supporting member (410) includes:
a first receiving hole (419a), extending from a surface (410a) of the supporting member (410) that supports a display (420) to another surface (410b) of the supporting member (410) opposite to the surface (410a) of the supporting member (410), and accommodating the first audio duct member (453); and
a second receiving hole (419b), extending from the surface (410a) of the supporting member (410) to the another surface (410b) of the supporting member (410), accommodating the second audio duct member (454), and separated from the first receiving hole (419a).
